# EUROPEAN PATENT APPLICATION

(11) **EP 4 794 441 A1**
(43) Date of publication of application: **19.08.2026**
(21) Application number: 24884452.4
(22) Date of filing: 17.10.2024
(51) Int. Cl.: H04W 76/10

(54) **NETWORK ELEMENT SELECTION METHOD AND APPARATUS**

(30) Priority: 02.11.2023 CN 202311454004
(71) Applicant: HUAWEI TECHNOLOGIES CO., LTD., Shenzhen 518129 (CN)
(72) Inventor: LI, Meng, Shenzhen, Guangdong 518129 (CN); ZHANG, Zhiqin, Shenzhen, Guangdong 518129 (CN)
(74) Representative: MERH-IP Matias Erny Reichl Hoffmann Patentanwälte PartG mbB
(86) International application number: PCT/CN2024/125603
(87) International publication number: WO 2025/092448

(57) **Abstract**

A network element selection method and apparatus are provided. In the network element selection method, a first network element receives description information of one or more second network elements in a network, where the description information of each second network element in the one or more second network elements indicates whether the second network element is disabled when the network is in an energy saving state; and the first network element selects, based on the description information of the one or more second network elements, a second network element from the one or more second network elements for a session that a terminal device requests to establish. It can be learned that, when selecting the second network element for the session, the first network element performs selection based on the received description information of the one or more second network elements while considering network energy saving. This helps provide a condition for whether to disable, when the network is in the energy saving state, the second network element selected for the session.

## Description

This application claims priority to Chinese Patent Application No. 202311454004.2, filed with the China National Intellectual Property Administration on November 2, 2023 and entitled "NETWORK ELEMENT SELECTION METHOD AND APPARATUS", which is incorporated herein by reference in its entirety.

### TECHNICAL FIELD

This application relates to the field of communication technologies, and in particular, to a network element selection method and apparatus.

### BACKGROUND

In a wireless communication network, when a terminal device has a service requirement, the terminal device may request to establish a protocol data unit (protocol data unit, PDU) session, and the PDU session can provide a logical connection between the terminal device and a data network (data network, DN). In a process of establishing the PDU session for the terminal device, a user plane function (user plane function, UPF) network element is selected for the PDU session. The UPF network element may be configured to interconnect the PDU session with the data network. In consideration of network energy saving, how to select the UPF network element for the PDU session is a technical problem that needs to be resolved.

### SUMMARY

Embodiments of this application provide a network element selection method and apparatus, so that a second network element can be selected for a session while considering network energy saving.

According to a first aspect, this application provides a network element selection method. The method may be applied to a first network element, or may be applied to a chip in the first network element, or may be applied to a logical module or software that can implement all or some functions of the first network element. The following uses the first network element as an example for description. The method includes: The first network element receives description information of one or more second network elements in a network, where the description information of each second network element in the one or more second network elements indicates whether the second network element is disabled when the network is in an energy saving state; and the first network element selects, based on the description information of the one or more second network elements, a second network element from the one or more second network elements for a session that a terminal device requests to establish.

It can be learned that, when selecting the second network element for the session, the first network element makes selection based on the received description information of the one or more second network elements. The description information of the second network element indicates whether the second network element is disabled when the network is in the energy saving state, which helps provide a condition for whether to disable, when the network is in the energy saving state, the second network element selected for the session.

In an optional implementation, that the first network element selects, based on the description information of the one or more second network elements, a second network element from the one or more second network elements for a session that a terminal device requests to establish includes: The first network element selects the second network element for the session from the one or more second network elements based on a service continuity requirement corresponding to the session and the description information of the one or more second network elements. It can be learned that when selecting the second network element for the session, the first network element further performs selection based on the service continuity requirement corresponding to the session, so that the selected second network element can adapt to the service continuity requirement corresponding to the session.

In an optional implementation, when the service continuity requirement corresponding to the session indicates to keep transmission continuity of a service in the network within duration of the session, description information of the second network element selected for the session indicates that the second network element is not disabled when the network is in the energy saving state.

In an optional implementation, the service continuity requirement corresponding to the session is a session and service continuity (session and service continuity, SSC) mode corresponding to the session.

In an optional implementation, the method further includes: The first network element receives first information from the terminal device, where the first information indicates an SSC mode requested by the terminal device for the session; and the first network element determines, based on the SSC mode requested by the terminal device for the session, the SSC mode corresponding to the session.

In an optional implementation, when the SSC mode corresponding to the session is an SSC mode 1, the description information of the second network element selected for the session indicates that the second network element is not disabled when the network is in the energy saving state, and the SSC mode 1 indicates that changing the second network element corresponding to the session within the duration of the session is not supported. This manner is for a session corresponding to the SSC mode 1, and helps provide a condition for not disabling, when the network is in the energy saving state, the second network element selected for the session, so as to ensure that a service corresponding to the session is continuously transmitted in the network, thereby ensuring session quality.

In an optional implementation, when the SSC mode corresponding to the session is an SSC mode 2 or an SSC mode 3, the description information of the second network element selected for the session indicates that the second network element is disabled when the network is in the energy saving state, and the SSC mode 2 and the SSC mode 3 indicate that changing the second network element corresponding to the session within the duration of the session is supported. This manner is for a session corresponding to the SSC mode 2 or the SSC mode 3, and helps provide a condition for disabling, when the network is in the energy saving state, the second network element selected for the session, thereby reducing network energy consumption.

In an optional implementation, that the description information of each second network element in the one or more second network elements indicates whether the second network element is disabled when the network is in an energy saving state includes: The description information of each second network element in the one or more second network elements indicates whether a data network and/or a network slice supported by the second network element are/is disabled when the network is in the energy saving state.

The method further includes: The first network element receives second information from the terminal device, where the second information indicates a data network and/or a network slice associated with the session and requested by the terminal device. When the SSC mode corresponding to the session is an SSC mode 1, the second network element selected for the session supports the data network and/or the network slice associated with the session and requested by the terminal device, and the description information of the second network element selected for the session indicates that the data network and/or the network slice associated with the session and requested by the terminal device are/is not disabled when the network is in the energy saving state. The SSC mode 1 indicates that changing the second network element corresponding to the session within the duration of the session is not supported. This manner is for a session corresponding to the SSC mode 1, and helps provide a condition for not disabling, when the network is in the energy saving state, a data network and/or a network slice associated with the session and requested by the terminal device supported by the second network element selected for the session, thereby ensuring continuous transmission of the service corresponding to the session in the network.

Alternatively, when the SSC mode corresponding to the session is an SSC mode 2 or an SSC mode 3, the second network element selected for the session supports the data network and/or the network slice associated with the session and requested by the terminal device, and the description information of the second network element selected for the session indicates that the data network and/or the network slice associated with the session and requested by the terminal device are/is disabled when the network is in the energy saving state. The SSC mode 2 and the SSC mode 3 indicate that changing the second network element corresponding to the session within the duration of the session is supported. This manner is for a session corresponding to the SSC mode 2 or the SSC mode 3, and helps provide a condition for disabling, when the network is in the energy saving state, a data network and/or a network slice associated with the session and requested by the terminal device supported by the second network element selected for the session, thereby reducing network energy consumption.

In an optional implementation, when the description information of the second network element indicates that the second network element is disabled when the network is in the energy saving state, the description information of the second network element further indicates a priority of disabling the second network element when the network is in the energy saving state. That the first network element selects the second network element for the session from the one or more second network elements based on a service continuity requirement corresponding to the session and the description information of the one or more second network elements includes: When the SSC mode corresponding to the session is an SSC mode 1, and the description information of each second network element in the one or more second network elements indicates that the second network element is disabled when the network is in the energy saving state, the first network element selects a second network element for the session based on a priority, indicated by the description information of each second network element in the one or more second network elements, of disabling the second network element when the network is in the energy saving state; where the SSC mode 1 indicates that changing the second network element corresponding to the session within the duration of the session is not supported.

In an optional implementation, the description information of each second network element in the one or more second network elements further indicates a validity period of the description information. Before the first network element selects, based on the description information of the one or more second network elements, the second network element from the one or more second network elements for the session that the terminal device requests to establish, the method further includes: The first network element receives third information from the terminal device, where the third information indicates the duration of the session that the terminal device requests to establish; and the validity period of the description information of the second network element selected for the session includes a part or all of the duration.

In an optional implementation, that the first network element receives description information of one or more second network elements in a network includes: The first network element receives the description information of the second network element sent by each second network element in the one or more second network elements.

In an optional implementation, that the first network element receives description information of one or more second network elements in a network includes: The first network element receives the description information of the one or more second network elements sent by a third network element.

In an optional implementation, the method further includes: The first network element receives, from the terminal device, a message for requesting to establish the session.

In an optional implementation, the first network element is a session management function network element, and the second network element is a user plane function network element.

According to a second aspect, this application further provides a communication apparatus. The communication apparatus may be a first network element, or may be a chip in the first network element, or may be a logical module or software that can implement all or some functions of the first network element. The communication apparatus has a function of implementing some or all of the implementations in the first aspect. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus. In addition, the processing unit may be configured to control the communication unit to send and receive data/signaling.

In an implementation, the communication unit is configured to receive description information of one or more second network elements in a network, where the description information of each second network element in the one or more second network elements indicates whether the second network element is disabled when the network is in an energy saving state. The processing unit is configured to select, based on the description information of the one or more second network elements, a second network element from the one or more second network elements for a session that a terminal device requests to establish.

In addition, for another optional implementation of the communication apparatus in this aspect, refer to related content in the first aspect. Details are not described herein again.

In an example, the communication unit may be a transceiver or a communication interface, the storage unit may be a memory, and the processing unit may be a processor. The processor is coupled to the memory. The memory is configured to store a program or instructions processor. The processor may be configured to cause, when the program or the instructions are executed by the processor, the communication apparatus to perform the method according to the first aspect. The transceiver or the communication interface may be configured to receive and send signals and/or data.

In an implementation, the transceiver is configured to receive description information of one or more second network elements in a network, where the description information of each second network element in the one or more second network elements indicates whether the second network element is disabled when the network is in an energy saving state. The processor is configured to select, based on the description information of the one or more second network elements, a second network element from the one or more second network elements for a session that a terminal device requests to establish.

In addition, for another optional implementation of the communication apparatus in this aspect, refer to related content in the first aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver (or the communication interface) may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system-on-a-chip (system-on-a-chip, SoC). Whether the devices are independently disposed on different chips or integrated and disposed on one or more chips usually depends on a requirement of a product design. This embodiment of this application imposes no limitation on specific implementations of the foregoing components.

According to a third aspect, this application further provides a processor, configured to perform the foregoing methods. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver (or a communication interface) transmits the signal. After the foregoing signal is output by the processor, other processing may further need to be performed on the signal before the signal reaches the transceiver (or the communication interface). Similarly, when the processor receives the foregoing input signal, the transceiver (or the communication interface) receives the foregoing signal, and inputs the signal into the processor. Further, after the transceiver (or the communication interface) receives the foregoing signal, other processing may further need to be performed on the foregoing signal, and then the processed signal is input into the processor.

Unless otherwise specified, operations such as sending and receiving related to the processor may be more generally understood as operations such as outputting, receiving, and inputting of the processor if the operations do not conflict with actual functions or internal logic of the operations in related descriptions, instead of operations such as sending and receiving directly performed by a radio frequency circuit and an antenna.

In an implementation process, the processor may be a processor specially configured to perform the methods, or a processor, for example, a general-purpose processor, that executes computer instructions in a memory to perform the methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to a fourth aspect, this application further provides a communication system. The system includes the first network element and the second network element in the foregoing aspects. In another possible design, the system may further include another device that interacts with the first network element and/or the second network element in the solutions provided in this application.

According to a fifth aspect, this application provides a computer-readable storage medium. The computer-readable storage medium stores a computer program. When the computer program is run, the method according to the first aspect is performed.

According to a sixth aspect, this application further provides a computer program product including instructions. The computer program product includes computer program code; and when the computer program code is run, the method according to the first aspect is performed.

According to a seventh aspect, this application provides a chip system. The chip system includes a processor and an interface. The interface is configured to obtain a program or instructions, and the processor is configured to invoke the program or the instructions to implement a function in the first aspect. In a possible design, the chip system further includes a memory. The memory is configured to store program instructions and data that are necessary for a terminal. The chip system may include a chip, or may include a chip and another discrete component.

### BRIEF DESCRIPTION OF DRAWINGS

FIG. 1 is a diagram of a 5G network architecture based on a service-oriented interface;
FIG. 2 is a diagram of an architecture of a communication system according to an embodiment of this application;
FIG. 3 is a diagram of a network status;
FIG. 4 is a diagram of a network energy saving state;
FIG. 5 is a schematic flowchart of a network element selection method according to an embodiment of this application;
FIG. 6 is a diagram of another network element selection method according to an embodiment of this application;
FIG. 7 is a diagram of another network element selection method according to an embodiment of this application;
FIG. 8A and FIG. 8B are a diagram of another network element selection method according to an embodiment of this application;
FIG. 9A and FIG. 9B are a diagram of another network element selection method according to an embodiment of this application;
FIG. 10A and FIG. 10B are a diagram of another network element selection method according to an embodiment of this application;
FIG. 11A and FIG. 11B are a diagram of another network element selection method according to an embodiment of this application;
FIG. 12A and FIG. 12B are a diagram of another network element selection method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

The following describes embodiments of this application with reference to the accompanying drawings in embodiments of this application.

First, to better understand a network element selection method disclosed in embodiments of this application, a communication system to which embodiments of this application are applicable is described.

The technical solutions in embodiments of this application may be applied to various communication systems, for example, a global system for mobile communications, a long term evolution (long term evolution, LTE) system, a universal mobile telecommunications system, a 4^{th} generation (4th generation, 4G) mobile communication system, a 4.5^{th} generation (4.5^{th} generation, 4.5G) mobile communication system, a 5^{th} generation (5^{th} generation, 5G) mobile communication system. With continuous development of communication technologies, the technical solutions in embodiments of this application may be further applied to a subsequent evolved communication system, for example, a 6^{th} generation (6^{th} generation, 6G) mobile communication system, a 7^{th} generation (7^{th} generation, 7G) mobile communication system, and the like.

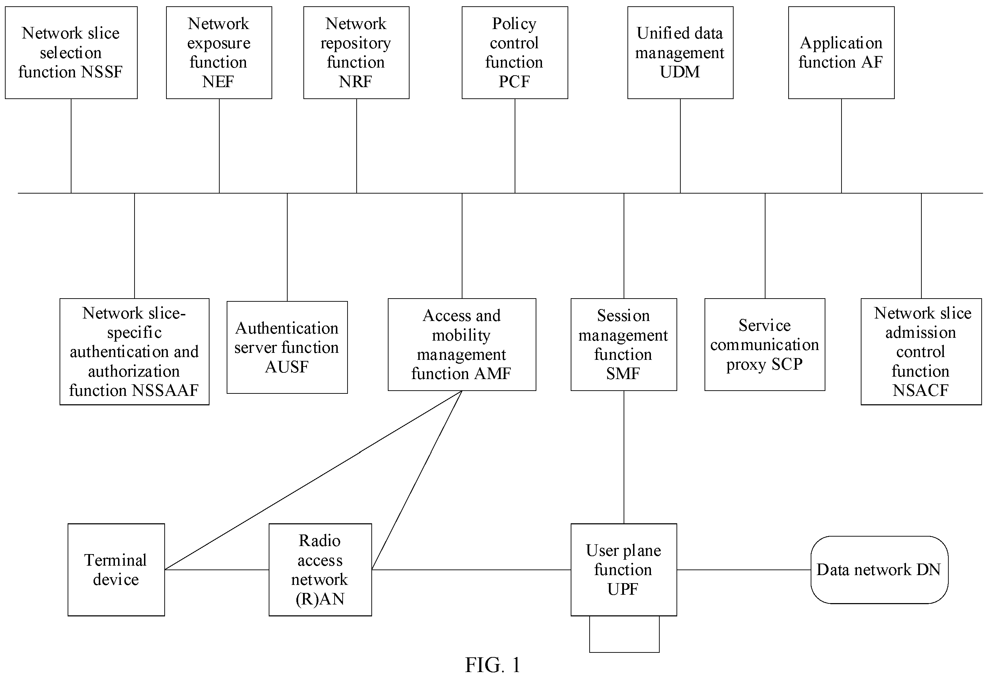

FIG. 1 is a diagram of a 5G network architecture based on a service-oriented interface. The 5G network architecture shown in FIG. 1 includes a terminal device, a data network (data network, DN), and an operator network. The operator network includes a radio access network (radio access network, RAN) and a core network. The core network includes one or more of the following network elements: a network slice selection function (network slice selection function, NSSF) network element, a network slice-specific authentication and authorization function (network slice-specific authentication and authorization function, NSSAAF) network element, an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a user plane function (user plane function, UPF) network element, a service communication proxy (service communication proxy, SCP) network element, a network slice admission control function (network slice admission control function, NSACF) network element, and the like.

In embodiments of this application, the terminal device may also be referred to as user equipment (user equipment, UE), a terminal, an access terminal, a subscriber unit, a subscriber station, a mobile station, a remote station, a remote terminal, a mobile device, a user terminal, a user agent, or a user apparatus, and can be used in a 4G system, a 5G system, a 6G system, or the like. The terminal device in embodiments of this application may be a joint device that transmits and receives a digital signal on a common telephone line, or may be a cellular phone, a cordless phone, a session initiation protocol (session initiation protocol, SIP) phone, a wireless local loop (wireless local loop, WLL) station, a personal digital processing (personal digital assistant, PDA), a mobile phone (mobile phone), a tablet computer (pad), a computer with a wireless transceiver function, a head-mounted display (head-mounted display, HMD), a virtual reality (virtual reality, VR) terminal device (such as VR glasses), an augmented reality (augmented reality, AR) terminal device (such as AR glasses), a hybrid reality (mixed reality, MR) terminal device, a wireless terminal in industrial control (industrial control), a processing device connected to a wireless modem, a tactile terminal device, a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in smart city (smart city), a wireless terminal in smart home (smart home), a road side unit (road side unit, RSU), a wearable terminal device, or the like of the foregoing wireless terminal type.

A RAN is configured to implement a radio-related function. A RAN device includes but is not limited to: a base station (base station, BS), a radio network controller (radio network controller, RNC), a base station controller (base station controller, BSC), a network device transceiver station (base transceiver station, BTS), a home network device (for example, a home evolved NodeB, or a home NodeB, HNB), a baseband unit (baseband unit, BBU), a radio relay node, a radio backhaul node, and a transmission and reception point (transmission and reception point, TRP; or a transmission point, TP). The base station is an apparatus that can provide a wireless communication function and that is deployed in a radio access network. The base station may also be referred to as a base station device, for example, an evolved NodeB (evolved NodeB, eNB or eNodeB) in an LTE system, a NodeB (NodeB), a base station (gNodeB or gNB) in a 5G system, and a base station in a 6G system. The base station may include a BBU and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components in a rack. The base station may be in the following forms: a macro base station, a micro base station (also referred to as a small cell), a pico base station, a relay station, an access point, a balloon station, and the like.

The AMF network element is responsible for mobility management of the terminal device, including mobility status management, allocation of a temporary identifier of the terminal device, and authentication and authorization of the terminal device.

The SMF network element is responsible for UPF network element selection, UPF network element reselection, Internet Protocol (internet protocol, IP) address allocation, bearer establishment, modification, and release, and quality of service (quality of Service, QoS) control. In the 5G system, an interface used for communication between the SMF network element and the UPF network element is an N4 interface. A specific function of the N4 interface includes: configuring data forwarding details (for example, a forwarding rule and a QoS assurance rule) of a PDU session, event reporting, exchanging network element-level configuration information, and the like.

The UDM network element is responsible for managing subscription data, and notifying a corresponding network element when the subscription data is modified.

The UDR network element is configured to store and retrieve subscription data, policy data, common architecture data, and the like, and is further used by the UDM network element, the PCF network element, and the NEF network element to obtain related data. The UDR network element needs to provide different data access authentication mechanisms for different types of data, such as subscription data and policy data, to ensure data access security. For an invalid service-oriented operation or a data access request, the UDR network element needs to return a failure response with a proper cause value.

The AF network element is configured to provide an application layer service for the terminal device. When providing a service for the terminal device, the AF network element has a requirement on a QoS policy (policy) and a charging (charging) policy, and needs to notify a network of the requirement. In addition, the AF network element also needs application-related information fed back by a core network.

The UPF network element supports all or some of the following functions: interconnection between a PDU session and a data network, packet routing and forwarding, and data packet detection. The UPF network element supports packet routing and forwarding. For example, the UPF network element supports forwarding traffic to a data network after an uplink classifier (uplink classifier, UL CL), and supports a branching point (branching point) to support a multi-homed (multi-homed) PDU session.

In addition, when a new UPF instance needs to be deployed, the UPF instance is configured with an identifier of an NRF network element to be contacted for registration and UPF provisioning information thereof. The UPF network element does not need to know specific UPF provisioning information. Afterwards, the UPF instance initiates a network function (network function, NF) management registration (namely, Nnrf_NFManagement_NFRegister) request operation, providing its NF type, a fully qualified domain name (fully qualified domain name, FQDN) or IP address of its N4 interface, and the configured UPF provisioning information. Then, the NRF network element provides information about a newly deployed UPF instance for the SMF network element.

In a deployment, a system to which the network element selection method provided in embodiments of this application is applicable further includes an energy efficiency network function (energy efficiency network function, EE NF) network element, configured to be responsible for an energy saving-related management function in a network, and may specifically include all or some of the following functions: determining an energy saving state, executing an energy saving policy, performing energy saving-related configuration and an instruction with another network element in the network, and the like. The EE NF network element may be an independent logical function network element, or the EE NF network element may be a part of an operation and maintenance (operation and maintenance, OAM or O&M) system, or functions of the EE NF network element are distributed in an existing network element. This is not limited. In addition, the "EE NF network element" is an example name of a network element responsible for an energy saving-related management function in a network. The network element responsible for the energy saving-related management function in the network may alternatively have another name, for example, "energy saving network element". This is not limited.

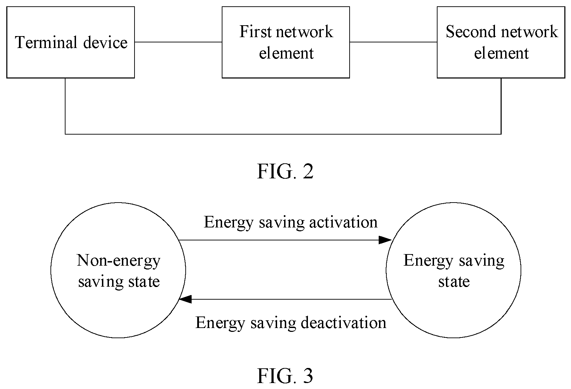

FIG. 2 is a diagram of a structure of a communication system according to an embodiment of this application. The communication system includes a first network element, a second network element, and a terminal device. Every two of the first network element, the second network element, and the terminal device may directly communicate with each other, or may indirectly communicate with each other by using another network element/device. For example, the first network element may be a session management function network element, and the second network element may be a user plane function network element. Using a 5G network as an example, the first network element may be an SMF network element, and the second network element may be a UPF network element. It may be understood that, as a network architecture changes, the network element selection method provided in embodiments of this application may also be implemented by a network element having a corresponding function in a new network architecture.

Then, related concepts in embodiments of this application are briefly described.

### 1. Network energy consumption status

The network energy consumption status includes a non-energy saving state (non-energy saving state) and an energy saving state (energy saving state). The non-energy saving state mainly refers to a state when energy saving is not performed on a network. The energy saving state may be a state in which some network elements in a cell or a network are disabled or hibernated. The energy saving state may alternatively be a state in which some functions of some network elements in a cell or a network are disabled or hibernated. For example, the energy saving state may be a state in which a data network and/or a network slice supported by some network elements in a cell or a network are/is disabled or hibernated. With reference to FIG. 3, energy saving activation (energy saving activation) is performed for a network in a non-energy saving state, and the network may be switched from the non-energy saving state to the energy saving state. Energy saving deactivation (energy saving deactivation) is performed on a network in the energy saving state, and the network may be switched from the energy saving state to the non-energy saving state.

An operation and maintenance system determines whether the network enters the energy saving state or the non-energy saving state. For example, the operation and maintenance system may determine, based on the following situations, that the network needs to enter the energy saving state:
(1) Data traffic on the network is lower than a threshold.
(2) Power consumption of the network exceeds a preset value.
(3) A power consumption rate of the network exceeds a preset value.
(4) An electricity fee in a current time period exceeds a preset value.
(5) The network enters the energy-saving state in some fixed time periods.

It should be noted that, when the network is in the energy saving state, all network elements in the network are not limited to be disabled or hibernated. In a possible case, some network elements in a network are shut down or hibernated, but other network elements still work normally, which may also be referred to as "the network element disabled or hibernated is in the energy saving state" in this case. That a network element is in a hibernated (or sleep) state may be understood as that the network element may be in an enabled or disabled state, but may be unable to process or respond to a service request for energy saving or other purposes.

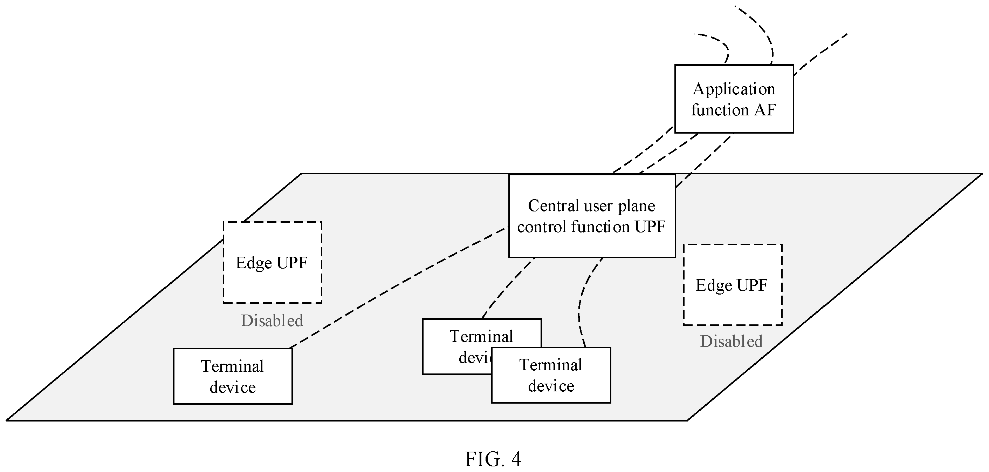

A 5G network is used as an example. The network may disable an edge UPF network element during a traffic peak period and a traffic valley period to save network energy. During off-peak hours, an operator may disable some edge UPF network elements based on information about a served user to save network energy. For example, with reference to FIG. 4, at night, at some locations where no user pays for a low-latency service, remaining traffic that does not require a low latency may be redirected from an edge UPF network element to a central UPF network element. In this scenario, the following operations may be performed to save energy on the network: redirecting remaining traffic of the edge UPF network element to an existing central UPF network element; and disabling the edge UPF network element, or disabling some instances of the edge UPF network element, or performing any other operation that can implement energy saving.

### 2. SSC mode

The SSC mode is an attribute related to continuity of a session established by a terminal device. The session established by the terminal device may be, for example, a PDU session. After the session is established, the SSC mode corresponding to the session does not change with a life cycle of the session. The life cycle of the session may also be understood as a duration period or duration of the session.

The SSC mode includes an SSC mode 1, an SSC mode 2, and an SSC mode 3. The SSC mode 1 indicates that changing the second network element corresponding to the session within the duration of the session is not supported, and the SSC mode 2 and the SSC mode 3 indicate that changing the second network element corresponding to the session within the duration of the session is supported. In this embodiment of this application, the second network element corresponding to the session is a second network element that serves the session.

The following describes the three SSC modes: the SSC mode 1, the SSC mode 2, and the SSC mode 3 by using an example in which a terminal device establishes a PDU session and a second network element corresponding to the PDU session is an anchor (anchor) user plane function network element for the PDU session.

SSC mode 1: Changing the anchor user plane function network element of the PDU session within the duration of the PDU session is not supported. It may be understood that the network retains a connection service of the terminal device, to be specific, an IP address corresponding to the PDU session of the terminal device is not changed within duration of the PDU session, and the IP address corresponds to the anchor user plane function network element of the PDU session. When the terminal device moves, if the anchor user plane function network element of the PDU session cannot be connected to a base station on which the terminal device currently camps, an intermediate user plane function network element may be inserted into a path, so that the anchor user plane function network element is connected, by using the intermediate user plane function network element, to the base station on which the terminal device currently camps.

SSC mode 2: Changing the anchor user plane function network element of the PDU session within the duration of the PDU session is supported. It may be understood that an IP address corresponding to the PDU session within the duration of the PDU session is supported, and the IP address corresponds to an anchor user plane function network element of the PDU session. When the terminal device moves, if the anchor user plane function network element of the PDU session cannot be connected to a base station on which the terminal device currently camps, the network releases a PDU session resource corresponding to the anchor user plane function network element, and then sets a new anchor user plane function network element for the PDU session based on a latest location of the terminal device. An IP address corresponding to the PDU session of the terminal device changes correspondingly.

SSC mode 3: Changing the anchor user plane function network element of the PDU session within the duration of the PDU session is supported. It may be understood that an IP address corresponding to the PDU session within the duration of the PDU session is supported, and the IP address corresponds to an anchor user plane function network element of the PDU session. When the terminal device moves, if the anchor user plane function network element of the PDU session cannot be connected to a base station on which the terminal device currently camps, the network sets a new anchor user plane function network element for the PDU session of the terminal device based on a latest location of the terminal device, and then releases a PDU session resource corresponding to an old anchor user plane function network element. An IP address corresponding to the PDU session of the terminal device changes correspondingly. Compared with the SSC mode 2, the SSC mode 3 provides better continuity.

The following describes embodiments of this application in detail with reference to the accompanying drawings. In embodiments of this application, an example in which the first network element is used as an execution body is used to illustrate a corresponding method. However, an execution body of the method is not limited in this application. For example, the network element/device in the method may alternatively be a chip, a chip system, or a processor that supports the network element/device in implementing a corresponding method, or may be a logical module or software that can implement all or some functions of the network element/device.

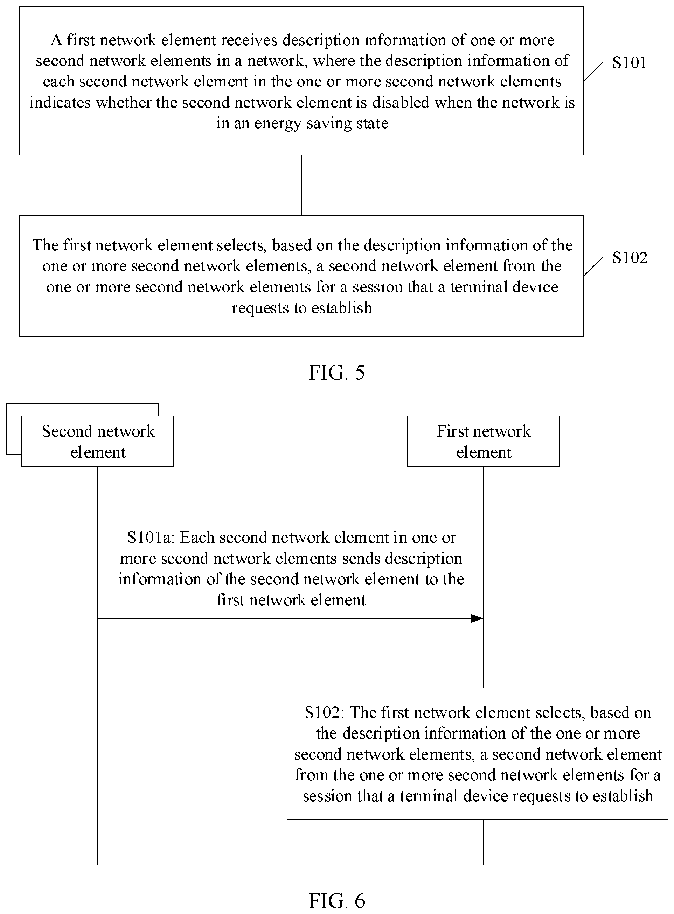

FIG. 5 is a schematic flowchart of a network element selection method according to an embodiment of this application. The network element selection method includes the following steps.

S101: A first network element receives description information of one or more second network elements in a network, where the description information of each second network element in the one or more second network elements indicates whether the second network element is disabled when the network is in an energy saving state.

It may be understood that the description information of the second network element indicates that the second network element is disabled when the network is in the energy saving state, which is not limited to that the second network element is definitely disabled when the network is in the energy saving state. In addition to that the second network element is disabled when the network is in the energy saving state, it may also be understood that the second network element may be disabled when the network is in the energy saving state. In addition, the description information of the second network element indicates whether the second network element is disabled when the network is in the energy saving state, and may specifically indicate whether the second network element is disabled when the network is in the energy saving state in the future. It can be learned that the first network element may receive the description information of the one or more second network elements in the network in advance before the network is in the energy saving state, so as to select, from the one or more second network elements based on the description information of the one or more second network elements, the second network element for the session requested by the terminal device, thereby providing a condition for whether to disable, when the network is in the energy saving state in the future, the second network element selected for the session.

The following further describes the description information of the second network element, as described in the following optional implementation 1.1 to implementation 1.6.

Implementation 1.1: The description information of the second network element includes a first indication. The first indication indicates whether the second network element is disabled when the network is in the energy saving state.

Optionally, the first indication may use "0" or "1" to represent whether the second network element is disabled when the network is in the energy saving state. For example, when the first indication is "1", it indicates that the second network element is disabled when the network is in the energy saving state, and when the first indication is "0", it indicates that the second network element is not disabled when the network is in the energy saving state. Alternatively, when the first indication is "0", it indicates that the second network element is disabled when the network is in the energy saving state, and when the first indication is "1", it indicates that the second network element is not disabled when the network is in the energy saving state. In addition, the first indication may alternatively be represented in another manner, for example, an enumerated type (enumerated). This is not limited.

For example, the first indication "1" indicates that the second network element is disabled when the network is in the energy saving state, and the first indication "0" indicates that the second network element is not disabled when the network is in the energy saving state. Description information #1 of a second network element #1 indicates that the second network element #1 is disabled when the network is in the energy saving state, which may be represented as follows: The description information #1 includes a first indication with a value of "1". Description information #2 of a second network element #2 indicates that the second network element #2 is not disabled when the network is in the energy saving state, which may be represented as follows: The description information #2 includes a first indication with a value of "0".

Implementation 1.2: The description information of the second network element further indicates a priority or a probability of disabling the second network element when the network is in the energy saving state. It may be understood that a higher priority or probability of disabling the second network element when the network is in the energy saving state as indicated by the description information of the second network element indicates a higher possibility of disabling the second network element when the network is in the energy saving state.

In an optional manner, the implementation 1.2 may be applied to a case in which the description information of the second network element indicates that the second network element is disabled when the network is in the energy saving state. Optionally, when the description information of the second network element indicates that the second network element is disabled when the network is in the energy saving state, the description information of the second network element includes a first indication and a second indication. The first indication indicates that the second network element is disabled when the network is in the energy saving state. For specific descriptions, refer to related descriptions in the implementation 1.1. Details are not described again. The second indication indicates a priority or a probability of disabling the second network element when the network is in the energy saving state.

A representation method of the second indication is not limited in this embodiment of this application. For example, the second indication is a digit or a letter corresponding to the priority. For example, when the network is in the energy saving state, priorities of disabling the second network element are classified into a level A, a level B, and a level C in descending order. When the second indication included in the description information of the second network element #1 is "A", it indicates that the description information of the second network element #1 indicates that a priority of disabling the second network element #1 when the network is in the energy saving state is the level A. For another example, the second indication is a probability value. For example, when the second indication included in the description information of the second network element #2 is "75%", it indicates that the description information of the second network element #2 indicates that a probability of disabling the second network element #2 is 75% when the network is in the energy saving state.

In an optional manner, the description information of the second network element includes a second indication, and the second indication indicates a priority or a probability of disabling the second network element when the network is in the energy saving state.

For example, priorities of disabling the second network element when the network is in the energy saving state are classified into a plurality of levels, where the plurality of levels include a first level, and the first level indicates that the second network element is not disabled when the network is in the energy saving state. If the priority indicated by the second indication is the first level, it indicates that the description information of the second network element indicates that the second network element is not disabled when the network is in the energy saving state. If the priority indicated by the second indication is another level other than the first level in the plurality of levels, it indicates that the description information of the second network element indicates that the second network element is disabled when the network is in the energy saving state, and the priority of disabling the second network element is the priority indicated by the second indication.

For example, when the network is in the energy saving state, priorities of disabling the second network element are classified into a level A, a level B, and a level C in descending order, where the level C indicates that the second network element is not disabled when the network is in the energy saving state, namely, the level C is the first level described above. When the second indication included in the description information of the second network element #1 is "A", it indicates that the description information of the second network element #1 indicates that the second network element #1 is disabled and the priority of disabling the second network element #1 is the level A when the network is in the energy saving state. When the second indication included in the description information of the second network element #2 is "C", it indicates that the description information of the second network element #2 indicates that the second network element #2 is not disabled when the network is in the energy saving state.

For example, if the probability indicated by the second indication is not zero, it indicates that the description information of the second network element indicates that the second network element is disabled when the network is in the energy saving state, and the probability of disabling the second network element is the probability indicated by the second indication. If the probability indicated by the second indication is zero, it indicates that the description information of the second network element indicates that the second network element is not disabled when the network is in the energy saving state. For example, when the second indication included in the description information of the second network element #1 is "75%", it indicates that the description information of the second network element #1 indicates that the second network element #1 is disabled and a probability of disabling the second network element #1 is 75% when the network is in the energy saving state. When the second indication included in the description information of the second network element #2 is "0%", it indicates that the description information of the second network element #2 indicates that the second network element #2 is not disabled when the network is in the energy saving state.

Implementation 1.3: The description information of the second network element further indicates a time period in which the second network element is disabled when the network is in the energy saving state.

In an optional manner, the implementation 1.3 may be applied to a case in which the description information of the second network element indicates that the second network element is disabled when the network is in the energy saving state. Optionally, when the description information of the second network element indicates that the second network element is disabled when the network is in the energy saving state, the description information of the second network element includes a first indication and a third indication. The first indication indicates that the second network element is disabled when the network is in the energy saving state. For specific descriptions, refer to related descriptions in the implementation 1.1. Details are not described again. The third indication indicates a time period in which the second network element is disabled when the network is in the energy saving state.

A representation method of the third indication is not limited in this embodiment of this application. For example, the third indication is a start time and an end time corresponding to a time period. For example, when the third indication included in the description information of the second network element #1 is "00:00, 03:00 at night", it indicates that the description information of the second network element #1 indicates that the second network element #1 is disabled from 00:00 to 03:00 at night when the network is in the energy saving state. For another example, the third indication is a time sequence. For example, when the third indication included in the description information of the second network element #1 is "00:00, 01:00, 02:00, 03:00", it indicates that the description information of the second network element #1 indicates that the second network element #1 is disabled from 00:00 to 03:00 at night when the network is in the energy saving state.

In an optional manner, the description information of the second network element includes a third indication, and the third indication indicates a time period in which the second network element is disabled when the network is in the energy saving state. For example, if the third indication is default, it indicates that the description information of the second network element indicates that the second network element is not disabled when the network is in the energy saving state. If the third indication is not default, it indicates that the description information of the second network element indicates that the second network element is disabled when the network is in the energy saving state, and a time period in which the second network element is disabled is a time period indicated by the third indication. For example, when content of the third indication included in the description information of the second network element #1 is all zeros, it may be considered that the third indication is default, and it indicates that the description information of the second network element #1 indicates that the second network element #1 is not disabled when the network is in the energy saving state. For another example, when the third indication included in the description information of the second network element #2 is "00:00, 03:00 at night", it may be considered that the third indication is not default, and it indicates that the description information of the second network element #2 indicates that the second network element #2 is disabled from 00:00 to 03:00 at night when the network is in the energy saving state.

Implementation 1.4: The description information of the second network element further indicates a priority or a probability of disabling the second network element when the network is in the energy saving state, and a time period in which the second network element is disabled.

Optionally, the description information of the second network element includes a second indication and a third indication, where the second indication indicates a priority or a probability of disabling the second network element when the network is in the energy saving state, and the third indication indicates a time period in which the second network element is disabled when the network is in the energy saving state. For specific descriptions of the second indication, refer to related descriptions in Implementation 2. For specific descriptions of the third indication, refer to related descriptions in Implementation 3. Details are not described again. Optionally, the implementation 1.4 may be applied to a case in which the description information of the second network element indicates that the second network element is disabled when the network is in the energy saving state. In this case, the second network element may further include a first indication, where the first indication indicates that the second network element is disabled when the network is in the energy saving state. For specific descriptions of the first indication, refer to related descriptions in the implementation 1.1.

Implementation 1.5: That the description information of the second network element indicates whether the second network element is disabled when the network is in the energy saving state includes: The description information of the second network element indicates whether a data network and/or a network slice supported by the second network element are/is disabled when the network is in the energy saving state.

There may be one or more data networks and/or network slices supported by the second network element. That the data network supported by the second network element is disabled may be understood as that some or all data networks in the one or more data networks supported by the second network element are disabled. That the network slice supported by the second network element is disabled may be understood as that some or all network slices in the one or more network slices supported by the second network element are disabled.

In addition, the description information of the second network element further indicates, when the network is in the energy saving state, a disabled data network and/or network slice in the data network and/or the network slice supported by the second network element, and/or a non-disabled data network and/or network slice in the data network and/or the network slice supported by the second network element.

In an optional manner, the description information of the second network element includes a fourth indication and an identifier associated with the fourth indication. The fourth indication indicates that the data network and/or the network slice supported by the second network element are/is disabled when the network is in the energy saving state, and the identifier associated with the fourth indication is an identifier of a disabled data network and/or network slice in the data network and/or the network slice supported by the second network element when the network is in the energy saving state. In this embodiment of this application, the identifier of the data network may be, for example, a data network name (data network name, DNN), and the identifier of the network slice may be, for example, single network slice selection assistance information (single network slice selection assistance information, S-NSSAI).

For example, the description information of the second network element #1 indicates that a network slice #1 (whose identifier is an S-NSSAI#1) and a network slice #2 (whose identifier is an S-NSSAI#2) in a network slice supported by the second network element #1 are disabled when the network is in the energy saving state, which may be represented as: The description information of the second network element #1 includes the fourth indication, the S-NSSAI#1, and the S-NSSAI#2.

In another optional manner, the description information of the second network element includes a fifth indication and an identifier associated with the fifth indication. The fifth indication indicates that the data network and/or the network slice supported by the second network element are/is not disabled when the network is in the energy saving state, and the identifier associated with the fifth indication is an identifier of the data network and/or the network slice not disabled in the data network and/or the network slice supported by the second network element when the network is in the energy saving state.

For example, the description information of the second network element #1 indicates that a network slice #3 (whose identifier is an S-NSSAI#3) and a network slice #4 (whose identifier is an S-NSSAI#4) in a network slice supported by the second network element #1 are disabled when the network is in the energy saving state, which may be represented as: The description information of the second network element #1 includes the fifth indication, the S-NSSAI#3, and the S-NSSAI#4.

In still another optional manner, the description information of the second network element includes the fourth indication, the identifier associated with the fourth indication, the fifth indication, and the identifier associated with the fifth indication. The fourth indication indicates that some data networks and/or network slices supported by the second network element are disabled when the network is in the energy saving state, and the identifier associated with the fourth indication is an identifier of a disabled data network and/or network slice in the data network and/or the network slice supported by the second network element when the network is in the energy saving state. The fifth indication indicates that some data networks and/or network slices supported by the second network element are not disabled when the network is in the energy saving state, and the identifier associated with the fifth indication is an identifier of the data network and/or the network slice not disabled in the data network and/or the network slice supported by the second network element when the network is in the energy saving state.

For example, the description information of the second network element #1 indicates that when the network is in the energy saving state, the network slice #1 (whose identifier is the S-NSSAI#1) and the network slice #2 (whose identifier is the S-NSSAI#2) in the network slices supported by the second network element #1 are not disabled, and the network slice #3 (whose identifier is the S-NSSAI#3) and the network slice #4 (whose identifier is the S-NSSAI#4) are disabled, which may be represented as: The description information of the second network element #1 includes the fourth indication, the S-NSSAI #1 and the S-NSSAI #2 that are associated with the fourth indication, the fifth indication, and the S-NSSAI #3 and the S-NSSAI #4 that are associated with the fifth indication.

Optionally, the description information of the second network element further indicates a priority or a probability of disabling the data network and/or the network slice supported by the second network element when the network is in the energy saving state, and/or the description information of the second network element further indicates a time period in which the data network and/or the network slice supported by the second network element are/is disabled when the network is in the energy saving state. "The priority or the probability of disabling the data network and/or the network slice supported by the second network element" is similar to "the priority or the probability of disabling the second network element" in the implementation 1.2. For details, refer to related descriptions of the implementation 1.2. Details are not described again. "The time period in which the data network and/or the network slice supported by the second network element is disabled" is similar to "the time period in which the second network element is disabled" in the implementation 1.2. For details, refer to related descriptions of the "time period in which the second network element is disabled". Details are not described again. Optionally, this implementation may be applied to a case in which the description information of the second network element indicates that the data network and/or the network slice supported by the second network element are/is disabled when the network is in the energy saving state.

For example, the description information of the second network element #1 indicates that when the network is in the energy saving state, there is a 75% probability that a data network #1 (whose identifier is a DNN#1) in the data network supported by the second network element #1 is disabled, there is a 50% probability that a data network #2 (whose identifier is a DNN#2) is disabled, and a data network #3 (whose identifier is a DNN#3) is not disabled.

The description information of the second network element #1 may include: the fourth indication, the DNN #1 and the DNN #2 that are associated with the fourth indication, a probability that the DNN #1 is disabled, namely, "75%", a probability that the DNN #2 is disabled, namely, "50%", the fifth indication, and the DNN #3 associated with the fifth indication. The fourth indication indicates that some data networks and/or network slices supported by the second network element #1 are disabled when the network is in the energy saving state, and the fifth indication indicates that some data networks and/or network slices supported by the second network element #1 are not disabled when the network is in the energy saving state.

Alternatively, the description information of the second network element #1 may include {DNN#1, 75%}, {DNN#2, 50%}, and {DNN#3, 0%}.

Implementation 1.6: The description information of the second network element further indicates a validity period (validity period) of the description information. The validity period of the description information may also be understood as an available period or an effective period of the description information. In addition, in addition to being used as a separate implementation, the implementation 1.6 may be combined with any one of the foregoing implementations 1.1 to 1.5.

In an optional implementation, that a first network element receives description information of one or more second network elements in a network in FIG. 5 includes: S101a: Each second network element in the one or more second network elements sends the description information of the second network element to the first network element; and correspondingly, the first network element receives the description information of the second network element sent by each second network element in the one or more second network elements, as shown in FIG. 6. For example, a second network element #1 sends description information #1 to the first network element, and a second network element #2 sends description information #2 to the first network element, where the description information #1 indicates whether the second network element #1 is disabled when the network is in the energy saving state, and the description information #2 indicates whether the second network element #2 is disabled when the network is in the energy saving state.

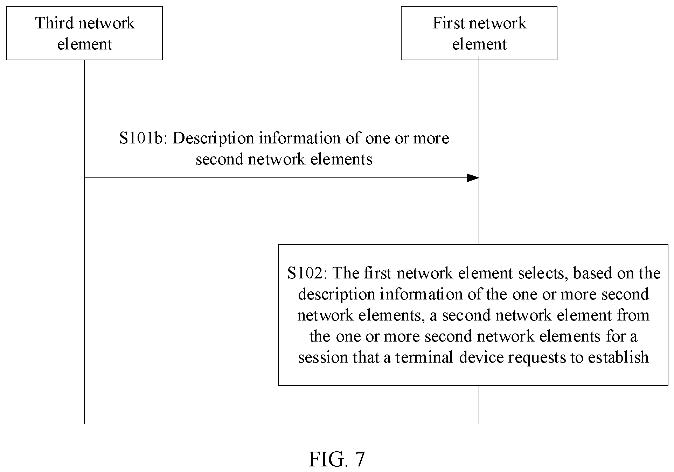

In another optional implementation, that a first network element receives description information of one or more second network elements in a network in FIG. 5 includes: S101b: A third network element sends the description information of the one or more second network elements to the first network element; and correspondingly, the first network element receives the description information of the one or more second network elements sent by the third network element, as shown in FIG. 7. The third network element is different from the first network element and the second network element. For example, the third network element sends the description information #1 of the second network element #1 and the description information #2 of the second network element #2 to the first network element, where the description information #1 indicates whether the second network element #1 is disabled when the network is in the energy saving state, and the description information #2 indicates whether the second network element #2 is disabled when the network is in the energy saving state.

S102: The first network element selects, based on the description information of the one or more second network elements, a second network element from the one or more second network elements for a session that a terminal device requests to establish.

Optionally, before step S102, the method further includes: The first network element receives, from the terminal device, a message for requesting to establish the session.

Optionally, the session that the terminal device requests to establish may be a PDU session.

In an optional implementation, that the first network element selects, based on the description information of the one or more second network elements, a second network element from the one or more second network elements for a session that a terminal device requests to establish includes: The first network element selects the second network element for the session from the one or more second network elements based on a service continuity requirement corresponding to the session and the description information of the one or more second network elements.

Optionally, when the service continuity requirement corresponding to the session indicates to keep transmission continuity of a service in the network within duration of the session, description information of the second network element selected for the session indicates that the second network element is not disabled when the network is in the energy saving state. That transmission continuity of the service in the network is kept within the duration of the session may be understood as: Transmission continuity of the service at a transport layer or a network layer is kept within the duration of the session. Optionally, when the second network element is a user plane function network element, keeping transmission continuity of the service in the network within the duration of the session may also be represented as: An anchor (for example, a PDU session anchor) of the session remains unchanged within the duration of the session, or a user plane function of the session for accessing a data network remains unchanged within the duration of the session, or an IP address of the session remains unchanged within the duration of the session. Optionally, a service continuity requirement corresponding to the session is an SSC mode corresponding to the session. The SSC mode 1 indicates that changing the second network element corresponding to the session within the duration of the session is not supported, and the SSC mode 2 and the SSC mode 3 indicate that changing the second network element corresponding to the session within the duration of the session is supported. For specific descriptions of the SSC mode, refer to the foregoing related descriptions. Details are not described again.

The following describes step S102 in a case in which the service continuity requirement corresponding to the session is the SSC mode corresponding to the session, as described in the following optional implementation 2.1 to implementation 2.4.

Implementation 2.1: When the SSC mode corresponding to the session is the SSC mode 1, the description information of the second network element selected for the session indicates that the second network element is not disabled when the network is in the energy saving state. It may be understood that, for the session corresponding to the SSC mode 1, to ensure transmission continuity of the session in the network, the second network element corresponding to the session is not disabled when the network is in the energy saving state. Therefore, in step S102, selecting, for the session, the second network element that is not disabled when the network is in the energy saving state as indicated by the description information helps provide a condition for not disabling, when the network is in the energy saving state, the second network element selected for the session.

For example, the description information of the second network element #1 indicates that the second network element #1 is disabled when the network is in the energy saving state, and the description information of the second network element #2 indicates that the second network element #2 is not disabled when the network is in the energy saving state. When the SSC mode corresponding to the session is the SSC mode 1, the first network element selects the second network element #2 for the session.

Optionally, when the SSC mode corresponding to the session is the SSC mode 1, a priority of selecting, by the first network element for the session, the second network element that is not disabled when the network is in the energy saving state as indicated by the description information is higher than a priority of selecting the second network element that is disabled when the network is in the energy saving state as indicated by the description information. It can be learned that when the session corresponds to the SSC mode 1, the description information of the second network element that is preferentially selected by the first network element for the session indicates that the second network element is not disabled when the network is in the energy saving state. For example, the description information of the second network element #1 indicates that the second network element #1 is disabled when the network is in the energy saving state, and the description information of the second network element #2 indicates that the second network element #2 is not disabled when the network is in the energy saving state. When the session corresponds to the SSC mode 1, a priority of selecting the second network element #2 for the session by the first network element is higher than a priority of selecting the second network element #1.

Implementation 2.2: When the SSC mode corresponding to the session is the SSC mode 2 or the SSC mode 3, the description information of the second network element selected by the first network element for the session indicates that the second network element is disabled when the network is in the energy saving state. It may be understood that, for a session corresponding to the SSC mode 2 or the SSC mode 3, when the network is in the energy saving state, the second network element corresponding to the session may be disabled to reduce network energy consumption. In this case, in step S102, selecting, for the session, the second network element disabled when the network is in the energy saving state as indicated by the description information helps provide a condition for disabling, when the network is in the energy saving state, the second network element selected for the session.

Optionally, when the SSC mode corresponding to the session is the SSC mode 2 or the SSC mode 3, a priority of selecting, by the first network element for the session, the second network element disabled when the network is in the energy saving state as indicated by the description information is higher than a priority of selecting the second network element that is not disabled when the network is in the energy saving state as indicated by the description information. It can be learned that when the session corresponds to the SSC mode 2 or the SSC mode 3, the description information of the second network element that is preferentially selected by the first network element for the session indicates that the second network element is disabled when the network is in the energy saving state. For example, the description information of the second network element #1 indicates that the second network element #1 is disabled when the network is in the energy saving state, and the description information of the second network element #2 indicates that the second network element #2 is not disabled when the network is in the energy saving state. When the session corresponds to the SSC mode 2 or the SSC mode 3, a priority of selecting the second network element #1 for the session by the first network element is higher than a priority of selecting the second network element #2.

Implementation 2.3: When the SSC mode corresponding to the session is the SSC mode 1, and the description information of each second network element in the one or more second network elements indicates that the second network element is disabled when the network is in the energy saving state, the first network element selects the second network element for the session based on a priority or a probability of disabling the second network element when the network is in the energy saving state as indicated by the description information of each second network element in the one or more second network elements. This manner may be applied to a scenario in which the description information of the second network element indicates that the second network element is disabled when the network is in the energy saving state, and further indicates a priority or a probability of disabling the second network element when the network is in the energy saving state.

Optionally, when the SSC mode corresponding to the session is the SSC mode 1, and the description information of each second network element in the one or more second network elements indicates that the second network element is disabled when the network is in the energy saving state, a priority or a probability of disabling the second network element when the network is in the energy saving state as indicated by the description information of the second network element selected by the first network element for the session is the lowest in the one or more second network elements.

For example, when the network is in the energy saving state, priorities of disabling the second network element are classified into a level A, a level B, a level C, and a level D in descending order. The first network element receives description information of the second network element #1, the second network element #2, and the second network element #3. The description information of the second network element #1 indicates that the second network element #1 is disabled when the network is in the energy saving state, and a priority of disabling the second network element #1 is the level B, the description information of the second network element #2 indicates that the second network element #2 is disabled when the network is in the energy saving state, and a priority of disabling the second network element #2 is the level C, and the description information of the second network element #3 indicates that the second network element #3 is disabled when the network is in the energy saving state, and a priority of disabling the second network element #3 is the level A. It can be learned that the description information of each second network element received by the first network element indicates that the second network element is disabled when the network is in the energy saving state. When the SSC mode corresponding to the session is the SSC mode 1, the first network element selects the second network element #2 for the session.

Implementation 2.4: The method further includes: The first network element receives second information from the terminal device, where the second information indicates a data network and/or a network slice associated with the session and requested by the terminal device. When the SSC mode corresponding to the session is an SSC mode 1, the second network element selected by the first network element for the session supports the data network and/or the network slice associated with the session and requested by the terminal device, and the description information of the second network element selected for the session indicates that the data network and/or the network slice associated with the session and requested by the terminal device are/is not disabled when the network is in the energy saving state. Alternatively, when the SSC mode corresponding to the session is an SSC mode 2 or an SSC mode 3, the second network element selected by the first network element for the session supports the data network and/or the network slice associated with the session and requested by the terminal device, and the description information of the second network element selected for the session indicates that the data network and/or the network slice associated with the session and requested by the terminal device are/is disabled when the network is in the energy saving state.

It may be understood that, for the session corresponding to the SSC mode 1, the implementation 2.4 helps provide a condition for the following operations: When the network is in the energy saving state, the second network element selected for the session does not disable a data network and/or a network slice associated with the session and requested by the terminal device supported by the second network element, so as to ensure continuous transmission of a service corresponding to the session in the network. For the session corresponding to the SSC mode 2 or the SSC mode 3, the implementation 2.4 helps provide a condition for the following operations: When the network is in the energy saving state, for the second network element selected for the session, the second network element disables a data network and/or a network slice associated with the session and requested by the terminal device supported by the second network element, thereby reducing network energy consumption.

In addition, the implementation 2.4 may be applied to a scenario in which the description information of each second network element in the one or more second network elements indicates whether a data network and/or a network slice supported by the second network element are/is disabled when the network is in the energy saving state.

For example, the first network element receives the description information of the second network element #1, the second network element #2, and the second network element #3. The description information of the second network element #1 indicates that a network slice #1 supported by the second network element #1 is disabled and the network slice #2 is not disabled when the network is in the energy saving state. The description information of the second network element #2 indicates that a network element slice #2 and a network element slice #3 supported by the second network element #2 are disabled when the network is in the energy saving state. The description information of the second network element #3 indicates that the network element slice #3 supported by the second network element #3 is not disabled when the network is in the energy saving state. The first network element receives second information from the terminal device, where the second information indicates that the network slice associated with the session and requested by the terminal device is the network slice #2. When the SSC mode corresponding to the session is the SSC mode 1, the first network element selects the second network element #1 for the session. Alternatively, when the SSC mode corresponding to the session is the SSC mode 2 or the SSC mode 3, the first network element selects the second network element #2 for the session.

Optionally, when the SSC mode corresponding to the session is the SSC mode 1, the second network element selected by the first network element for the session supports the data network and/or the network slice associated with the session and requested by the terminal device. In addition, a priority of selecting, by the first network element for the session, the second network element, namely, the data network and/or the network slice associated with the session and requested by the terminal device that are/is not disabled when the network is in the energy saving state as indicated by the description information is higher than a priority of selecting, for the session, the second network element, namely, the data network and/or the network slice associated with the session and requested by the terminal device that are/is disabled when the network is in the energy saving state as indicated by the description information.

Optionally, when the SSC mode corresponding to the session is the SSC mode 2 or the SSC mode 3, the second network element selected by the first network element for the session supports the data network and/or the network slice associated with the session and requested by the terminal device. In addition, a priority of selecting, by the first network element for the session, the second network element, namely, the data network and/or the network slice associated with the session and requested by the terminal device that are/is disabled when the network is in the energy saving state as indicated by the description information is higher than a priority of selecting, for the session, the second network element, namely, the data network and/or the network slice associated with the session and requested by the terminal device that are/is not disabled when the network is in the energy saving state as indicated by the description information.

For example, the description information of the second network element #1 indicates that the network slice #1 supported by the second network element #1 is not disabled when the network is in the energy saving state, and the description information of the second network element #2 indicates that the network element slice #1 supported by the second network element #2 is disabled when the network is in the energy saving state. The second information received by the first network element from the terminal device indicates that the network slice associated with the session and requested by the terminal device is the network slice #1. When the SSC mode corresponding to the session is the SSC mode 1, a priority of selecting the second network element #1 by the first network element for the session is higher than a priority of selecting the second network element #2 for the session. Alternatively, when the SSC mode corresponding to the session is the SSC mode 2 or the SSC mode 3, a priority of selecting the second network element #2 by the first network element for the session is higher than a priority of selecting the second network element #1 for the session.

Optionally, when the SSC mode corresponding to the session is the SSC mode 1, and the description information of each second network element in the one or more second network elements that supports the data network and/or the network slice associated with the session and requested by the terminal device indicates: When the data network and/or the network slice associated with the session and requested by the terminal device are/is disabled when the network is in the energy saving state, the first network element selects the second network element for the session based on a priority or a probability of disabling the data network and/or network slice associated with the session and requested by the terminal device when the network is in the energy saving state as indicated by the description information of the second network element. This manner may be applied to a scenario in which the description information of the second network element indicates that the data network and/or the network slice supported by the second network element are/is disabled when the network is in the energy saving state, and further indicates a priority or a probability of disabling the data network and/or the network slice supported by the second network element when the network is in the energy saving state. This manner is similar to the foregoing implementation 2.3, and details are not described again.

In addition, in an optional implementation, for a case in which the service continuity requirement corresponding to the session is the SSC mode corresponding to the session, the method further includes: The first network element receives first information from the terminal device, where the first information indicates an SSC mode requested by the terminal device for the session; and the first network element determines, based on the SSC mode requested by the terminal device for the session, the SSC mode corresponding to the session. The SSC mode corresponding to the session may be the same as the SSC mode requested by the terminal device for the session, or may be different from the SSC mode requested by the terminal device for the session. This implementation may be combined with any one of the foregoing implementations 2.1 to 2.4. Optionally, the first information is carried in the message from the terminal device that is used to request to establish the session.

For example, when the first network element cannot determine, for the session based on the description information of the one or more second network elements, the second network element that matches the SSC mode requested by the terminal device for the session, the SSC mode corresponding to the session is different from the SSC mode requested by the terminal device for the session. For example, the first network element receives the description information of the second network element #1 and the second network element #2. The description information of the second network element #1 indicates that the second network element #1 is disabled when the network is in the energy saving state, and the description information of the second network element #2 indicates that the second network element #2 is disabled when the network is in the energy saving state. When the SSC mode requested by the terminal device for the session is the SSC mode 1, the first network element cannot select, for the session from the second network element #1 and the second network element #2, the second network element that is not disabled when the network is in the energy saving state as indicated by the description information. In this case, the first network element may modify the SSC mode, and use the SSC mode 2 or the SSC mode 3 as the SSC mode corresponding to the session, so that the first network element can select the second network element #1 or the second network element #2 for the session.

In an optional implementation, the method further includes: The first network element receives third information from the terminal device, where the third information indicates the duration of the session that the terminal device requests to establish. In this case, the validity period of the description information of the second network element selected by the first network element for the session includes a part or all of the duration of the session. The method may be applied to a scenario in which the description information of the second network element further indicates the validity period of the description information. This implementation may be combined with any one of the foregoing implementations in which the first network element selects the second network element from the one or more second network elements for the session that the terminal device requests to establish. For example, in a combination of this implementation and the foregoing implementation 2.1, when the SSC mode corresponding to the session is the SSC mode 1, the description information of the second network element selected for the session indicates that the second network element is not disabled when the network is in the energy saving state, and the validity period of the description information of the second network element selected for the session includes a part or all of the duration of the session.

In conclusion, in the network element selection method, the first network element receives description information of one or more second network elements in a network, where the description information of each second network element in the one or more second network elements indicates whether the second network element is disabled when the network is in an energy saving state; and the first network element selects, based on the description information of the one or more second network elements, a second network element from the one or more second network elements for a session that a terminal device requests to establish. It can be learned that, when selecting the second network element for the session, the first network element performs selection while considering network energy saving, that is, performs selection based on the received description information of each second network element. The description information of each second network element indicates whether the second network element is disabled when the network is in the energy saving state, which helps provide a condition for whether to disable, when the network is in the energy saving state, the second network element selected for the session.

In another embodiment, "the description information of the second network element indicates that the second network element is disabled when the network is in the energy saving state" in the network element selection method shown in FIG. 5 may be replaced with "the description information of the second network element indicates that the second network element enters a hibernated state when the network is in the energy saving state". In the network element selection method shown in FIG. 5, "the description information of the second network element indicates that the second network element is not disabled when the network is in the energy saving state" may be replaced with "the description information of the second network element indicates that the second network element does not enter the hibernated state when the network is in the energy saving state".

In this case, the priority or the probability of disabling the second network element may be replaced with a priority or a probability that the second network element enters the hibernated state. The time period in which the second network element is disabled may be replaced with a time period in which the second network element enters the hibernated state. That the data network/network slice supported by the second network element is disabled may be replaced with that the data network/network slice supported by the second network element enters the hibernated state. That the data network/network slice supported by the second network element is not disabled may be replaced with that the data network/network slice supported by the second network element does not enter the hibernated state. The priority or the probability of disabling the data network/network slice supported by the second network element may be replaced with "the priority or the probability that the data network/network slice supported by the second network element enters the hibernated state". The time period in which the data network/network slice supported by the second network element is disabled may be replaced with a time period in which the data network/network slice supported by the second network element enters the hibernated state.

Correspondingly, related descriptions of step S102 in the network element selection method shown in FIG. 5 may also be adaptively replaced.

For example, in the network element selection method shown in FIG. 5, "when the service continuity requirement corresponding to the session indicates to keep transmission continuity of a service in the network within duration of the session, description information of the second network element selected for the session indicates that the second network element is not disabled when the network is in the energy saving state" may be replaced with "when the service continuity requirement corresponding to the session indicates to keep transmission continuity of the service in the network within the duration of the session, the description information of the second network element selected for the session indicates the second network element not to enter the hibernated state when the network is in the energy saving state".

For example, in the foregoing implementation 2.1, "when the SSC mode corresponding to the session is the SSC mode 1, the description information of the second network element selected for the session indicates that the second network element is not disabled when the network is in the energy saving state" may be replaced with "when the SSC mode corresponding to the session is the SSC mode 1, the description information of the second network element selected for the session indicates that the second network element does not enter the hibernated state when the network is in the energy saving state".

For example, in the foregoing implementation 2.2, "when the SSC mode corresponding to the session is the SSC mode 2 or the SSC mode 3, the description information of the second network element selected by the first network element for the session indicates that the second network element is disabled when the network is in the energy saving state" may be replaced with "when the SSC mode corresponding to the session is the SSC mode 2 or the SSC mode 3, the description information of the second network element selected by the first network element for the session indicates that the second network element enters the hibernated state when the network is in the energy saving state".

For example, in the foregoing implementation 2.3, "when the SSC mode corresponding to the session is the SSC mode 1, and the description information of each second network element in the one or more second network elements indicates that the second network element is disabled when the network is in the energy saving state, the first network element selects the second network element for the session based on a priority or a probability of disabling the second network element when the network is in the energy saving state as indicated by the description information of each second network element in the one or more second network elements" may be replaced with "when the SSC mode corresponding to the session is the SSC mode 1, and the description information of each second network element in the one or more second network elements indicates that the second network element enters the hibernated state when the network is in the energy saving state, the first network element selects the second network element for the session based on a priority or a probability that the second network element enters the hibernated state when the network is in the energy saving state as indicated by the description information of each second network element in the one or more second network elements".

For example, in the foregoing implementation 2.4, "when the SSC mode corresponding to the session is an SSC mode 1, the second network element selected by the first network element for the session supports the data network and/or the network slice associated with the session and requested by the terminal device, and the description information of the second network element selected for the session indicates that the data network and/or the network slice associated with the session and requested by the terminal device are/is not disabled when the network is in the energy saving state. Alternatively, when the SSC mode corresponding to the session is an SSC mode 2 or an SSC mode 3, the second network element selected by the first network element for the session supports the data network and/or the network slice associated with the session and requested by the terminal device, and the description information of the second network element selected for the session indicates that the data network and/or the network slice associated with the session and requested by the terminal device are/is disabled when the network is in the energy saving state" may be replaced with
"when the SSC mode corresponding to the session is an SSC mode 1, the second network element selected by the first network element for the session supports the data network and/or the network slice associated with the session and requested by the terminal device, and the description information of the second network element selected for the session indicates that the data network and/or the network slice associated with the session and requested by the terminal device do/does not enter the hibernated state when the network is in the energy saving state. Alternatively, when the SSC mode corresponding to the session is an SSC mode 2 or an SSC mode 3, the second network element selected by the first network element for the session supports the data network and/or the network slice associated with the session and requested by the terminal device, and the description information of the second network element selected for the session indicates that the data network and/or the network slice associated with the session and requested by the terminal device enters the hibernated state when the network is in the energy saving state".

In addition, this embodiment of this application is not limited to the description of "hibernated state". The "hibernated state" may be alternatively replaced with another energy saving state that affects normal operation of the second network element. A case is similar to this case, and details are not described again.

An example in which a session requested by a terminal device is a PDU session, a first network element is a session management network element, and a second network element is a user plane function network element is used below to describe the network element selection method provided in embodiments of this application.

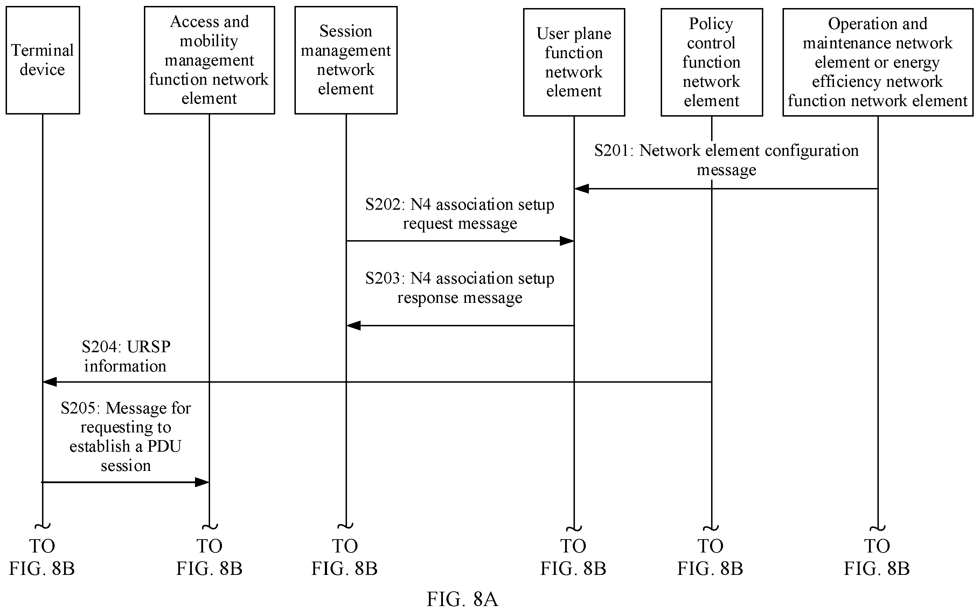

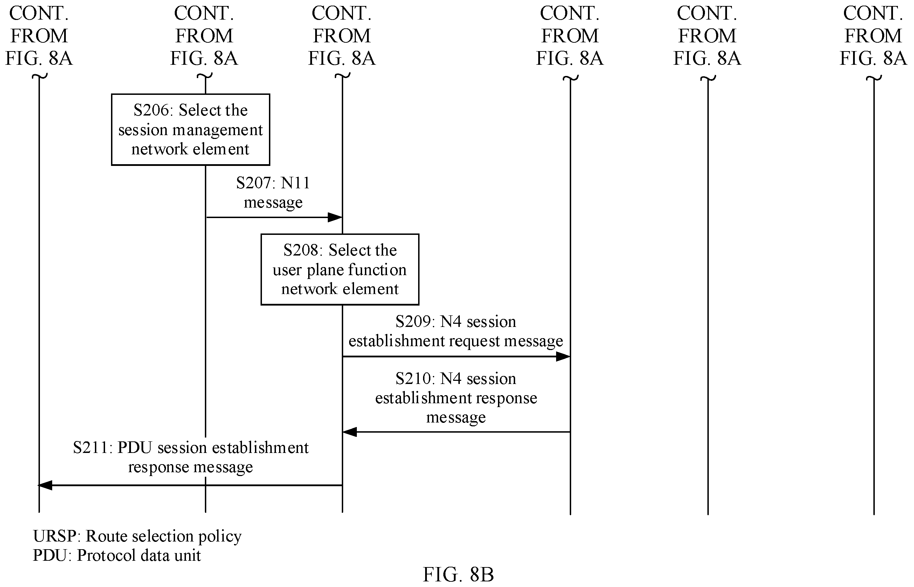

Example 1: Refer to FIG. 8A and FIG. 8B. A network element selection method shown in FIG. 8A and FIG. 8B includes the following steps.

S201: An operation and maintenance network element or an energy efficiency network function network element sends a network element configuration message to one or more user plane function network elements, where the network element configuration message sent to each user plane function network element includes description information of the user plane function network element. Correspondingly, each user plane function network element in the one or more user plane function network elements comes from the network element configuration message of the operation and maintenance network element or the energy efficiency network function network element.

In this embodiment of this application, the operation and maintenance network element is a network element responsible for a network element parameter configuration function in the operation and maintenance system. Details are not described below. In addition, for specific descriptions of the description information of the user plane function network element, refer to the foregoing related descriptions. Details are not described again.

S202: A session management function network element sends an N4 association setup request message to each user plane function network element in the one or more user plane function network elements. Correspondingly, each user plane function network element in the one or more user plane function network elements receives the N4 association setup request message from the session management function network element.

The N4 association setup request message indicates a configuration of an N4 interface, or is used to request the user plane function network element to feed back the description information of the user plane function network element, or is used to establish an association between the session management function network element and the user plane function network element, or is used to request to exchange functions supported by the session management function network element and the user plane function network element, or is used to request to obtain resource-related information of the user plane function network element. The N4 association setup request message may be, for example, an N4 association setup request message, or a packet forwarding control protocol (packet forwarding control protocol, PFCP) association setup request (PFCP association setup request) message. The N4 association setup response message may be, for example, an N4 association setup response message, or a PFCP association setup response (PFCP association setup response) message.

S203: Each user plane function network element in the one or more user plane function network elements sends an N4 association setup response message to the session management function network element, where the N4 association setup response message sent by each user plane function network element includes the description information of the user plane function network element. Correspondingly, the session management function network element receives the N4 association setup response message sent by each user plane function network element in the one or more user plane function network elements.

S204: A policy control function network element sends UE route selection policy (UE route selection policy, URSP) information to a terminal device.

Specifically, after the terminal device requests to register with a network, for example, after the terminal device sends a registration request (registration request) message, an access and mobility management function network element selects the policy control function network element, and then the policy control function network element provides the URSP information for the terminal device by using a UE policy container (UE policy container). The URSP information may be used to select an appropriate PDU session for the terminal device when the terminal device sends data. The URSP information includes an SSC mode selection policy (session and service continuity mode selection policy, SSCMSP), and the SSCMSP may be used to assist the terminal device in determining a requested SSC mode for the PDU session when selecting a PDU session.

S205: The terminal device sends, to the access and mobility management function network element based on the URSP information, a message used to request to establish a PDU session. Correspondingly, the access and mobility management function network element receives, from the terminal device, the message used to request to establish the PDU session.

The message used to request to establish the PDU session may be, for example, carried in an uplink non-access stratum (uplink non-access stratum, UL NAS) message.

Optionally, the message used to request to establish the PDU session may include one or more of the following: an identifier of the PDU session, first information, second information, and third information. The first information indicates an SSC mode requested by the terminal device for the session, the second information indicates a data network and/or a network slice that is requested by the terminal device and that is associated with the session, and the third information indicates the duration of the session that the terminal device requests to establish.

S206: The access and mobility management function network element selects a session management network element.

Optionally, the access and mobility management function network element selects the session management network element based on one or more of the following: an access technology of the terminal device, a location of the terminal device, a service area of the session management network element, the data network and/or the network slice that is requested by the terminal device and that is associated with the session, a data network and/or a network slice supported by the session management network element, whether the session management network element supports a network energy saving function, and whether the session management network element supports the SSC mode requested by the terminal device for the session.

Correspondingly, the session management network element selected by the access and mobility management function network element supports the data network and/or the network slice associated with the session and requested by the terminal device, supports the network energy saving function, and supports the SSC mode requested by the terminal device for the session.

S207: The access and mobility management function network element sends an N11 message to the selected session management network element.

The N11 message may include one or more of the following: an identifier of the PDU session, first information, second information, and third information. The first information indicates an SSC mode requested by the terminal device for the session, the second information indicates a data network and/or a network slice that is requested by the terminal device and that is associated with the session, and the third information indicates the duration of the session that the terminal device requests to establish. The N11 message may be, for example, a PDU session create session management context (Nsmf_PDUSession_CreateSMContext) message.

S208: The session management network element selects, from one or more second network elements based on description information of the one or more second network elements, a user plane function network element for the PDU session that the terminal device requests to establish.

For specific descriptions of step S208, refer to related descriptions in the network element selection method shown in FIG. 5. Details are not described again.

S209: The session management network element sends an N4 session establishment request message to the selected user plane function network element.

The N4 session establishment request message may include one or more of the following: an identifier of a PDU session, a packet detection rule (packet detection rule) of user plane data, a QoS enforcement rule (QoS enforcement rule) of user plane data, a forward action rule (forward action rule) of user plane data, and a usage reporting rule (usage reporting rule) of user plane data. The N4 session establishment request message may be an N4 session establishment request message or a PFCP session establishment request (PFCP session establishment request) message.

S210: The user plane function network element sends an N4 session establishment response message to the session management network element. Correspondingly, the session management network element receives the N4 session establishment response message from the user plane function network element.

Optionally, the N4 session establishment response message includes the SSC mode corresponding to the PDU session.

Optionally, the N4 session establishment response message may be an N4 session establishment response message or a PFCP session establishment response (PFCP session establishment response) message.

S211: The session management network element sends the PDU session establishment response message to the terminal device. Correspondingly, the terminal device receives the PDU session establishment response message from the session management network element.

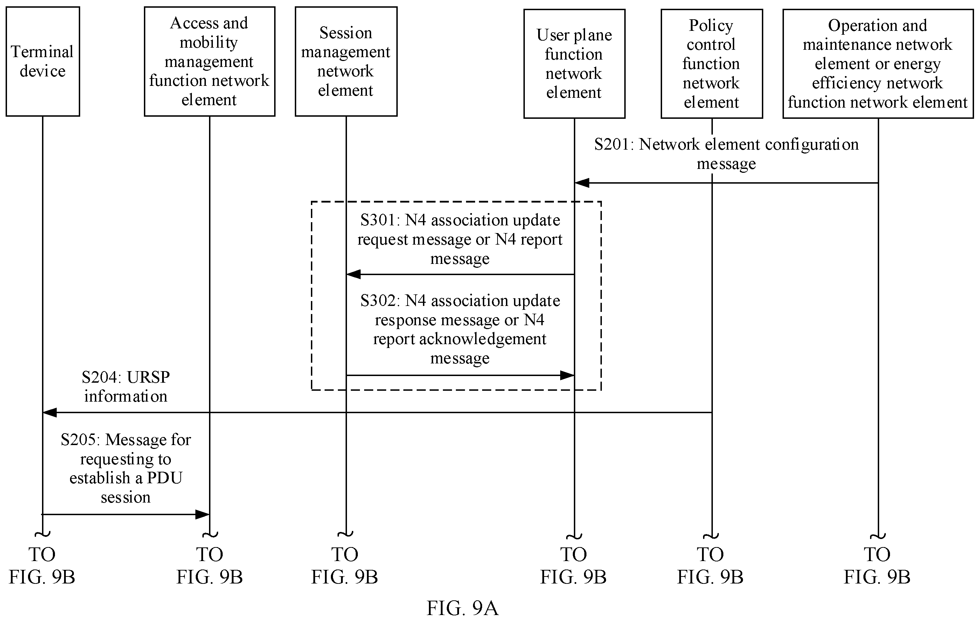

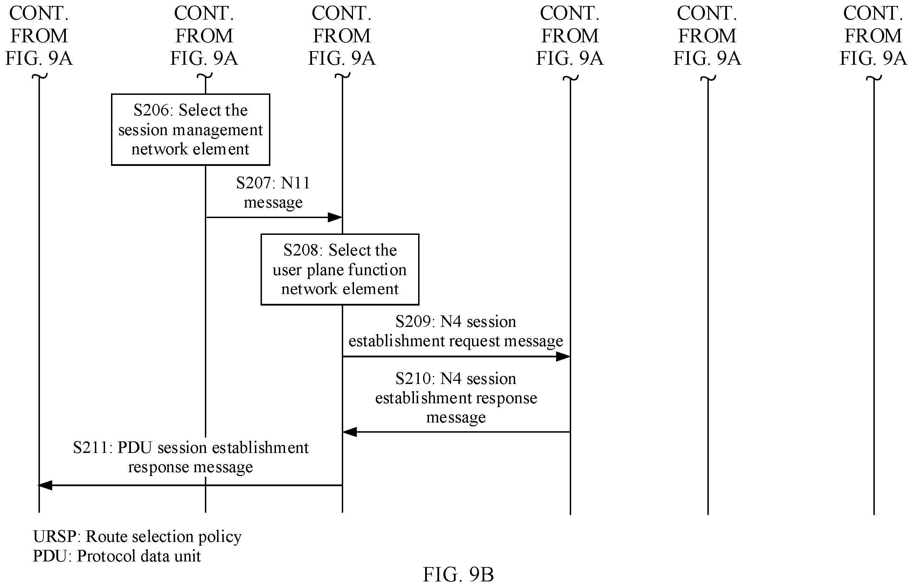

Example 2: As shown in a dashed box in FIG. 9A, a difference between a network element selection method shown in FIG. 9A and FIG. 9B and the network element selection method shown in FIG. 8A and FIG. 8B lies in that the network element selection method shown in FIG. 9A and FIG. 9B does not include steps S202 and S203 in FIG. 8A, and the network element selection method shown in FIG. 9A and FIG. 9B further includes steps S301 and S302 after step S201.

S301: Each user plane function network element in one or more user plane function network elements sends an N4 association update request message or an N4 report message to a session management function network element, where the N4 association update request message or the N4 report message sent by each user plane function network element includes description information of the user plane function network element. Correspondingly, the session management function network element receives the N4 association update request message or the N4 report message sent by each user plane function network element in the one or more user plane function network elements.

The N4 association update request message is used to request the session management function network element to update a configuration of an N4 interface, and the N4 report message indicates related information of an N4 session. The N4 association update request message may be, for example, an N4 association update request message or a PFCP association update request message (PFCP association update request message), and the N4 report message may be, for example, an N4 report message or a PFCP node report message (PFCP node report message). In addition, for specific descriptions of the description information of the second network element, refer to the foregoing related descriptions. Details are not described again.

S302: The session management function network element sends an N4 association update response message or an N4 report acknowledgment message to each user plane function network element. The N4 association update response message may be, for example, an N4 association update response message or a PFCP association update response message (PFCP association update response message). The N4 report acknowledgment message may be, for example, an N4 report ack message or a PFCP node report acknowledgment message (PFCP node report ack message).

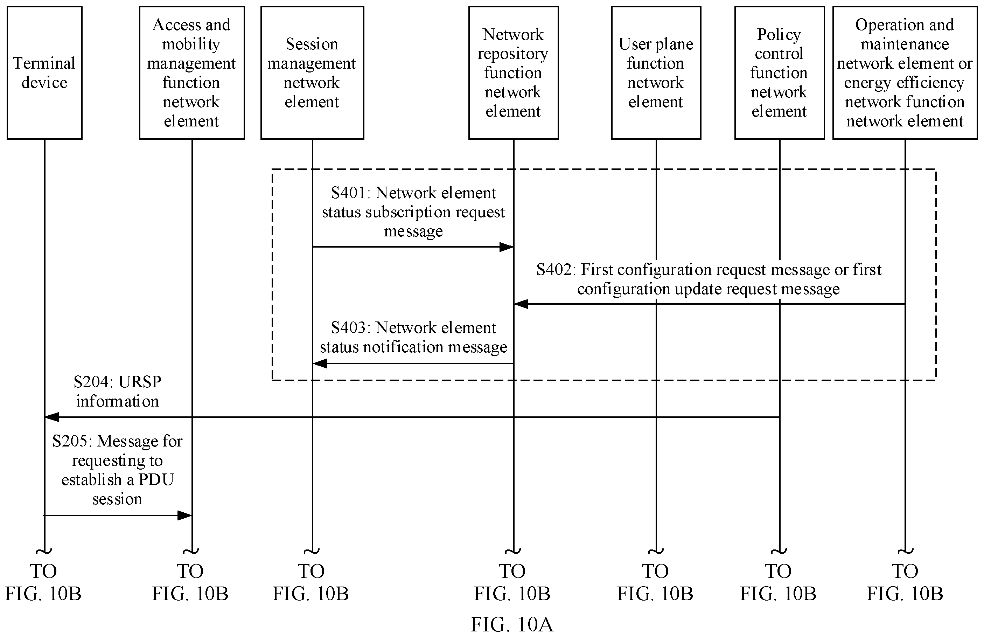

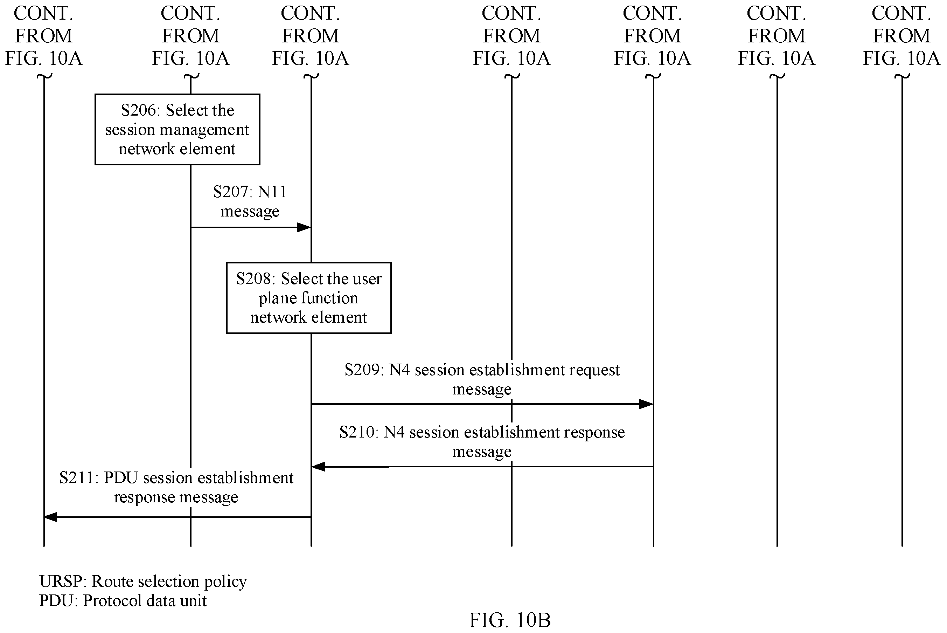

Example 3: A case in which a third network element is a network repository function network element. As shown in a dashed box in FIG. 10A, a difference between a network element selection method shown in FIG. 10A and FIG. 10B and the network element selection method shown in FIG. 8A and FIG. 8B lies in that the network element selection method shown in FIG. 10A and FIG. 10B does not include steps S201 to S203 in FIG. 8A, and the network element selection method shown in FIG. 10A and FIG. 10B further includes steps S401 to S403.

S401: A session management function network element sends a network element status subscription request message to a network repository function network element. Correspondingly, the network repository function network element receives the network element status subscription request message from the session management function network element.

The network element status subscription request message is used to subscribe to network element status update information in a network from the network repository function network element. The network element status subscription request message may be used to enable the network repository function network element to notify the session management function network element of update information about a network element when a status of the network element in the network is updated. A network element to which the network element status subscription request message subscribes may be a specific network element in the network, or may be some or all network elements in the network. This is not limited. In addition, the network element status subscription request message may be, for example, a network function management and network function status subscription (namely, Nnrf_NFManagement_NFStatusSubscribe) message.

S402: An operation and maintenance network element or an energy efficiency network function network element sends a first configuration request message or a first configuration update request message to the network repository function network element, where the first configuration request message or the first configuration update request message includes an identifier of each user plane function network element in one or more user plane function network elements and description information of each user plane function network element. Correspondingly, the network repository function network element receives the first configuration request message or the first configuration update request message from the operation and maintenance network element or the energy efficiency network function network element.

The first configuration request message is used to configure related information of a user plane function network element for the network repository function network element, and the first configuration update request message is used to update the related information of the user plane function network element for the network repository function network element. The first configuration request message sent by the operation and maintenance network element may be, for example, an OAM configuration request (namely, OAM configuration request) message, and the first configuration update request message sent by the operation and maintenance network element may be, for example, an OAM configuration update request (OAM configuration update request) message.

Optionally, the first configuration request message or the first configuration update request message may further include one or more of the following information of the user plane function network element: load information, location information, an identifier of a supported data network, and an identifier of a supported network slice.

In addition, for specific descriptions of the description information of the second network element, refer to the foregoing related descriptions. Details are not described again.

S403: The network repository function network element sends a network element status notification message to the session management function network element, where the network element status notification message includes the identifier of each user plane function network element in the one or more user plane function network elements and the description information of each user plane function network element. Correspondingly, the session management function network element receives the network element status notification message from the network repository function network element.

The network element status notification message is used to notify the session management function network element of related information about a network element whose status is updated. The network element status notification message may be, for example, a network function management and network function status notification (namely, Nnrf_NFManagement_NFStatusNotify) message.

Optionally, the network element status notification message may further include one or more of the following information of the user plane function network element: load information, location information, an identifier of a supported data network, and an identifier of a supported network slice.

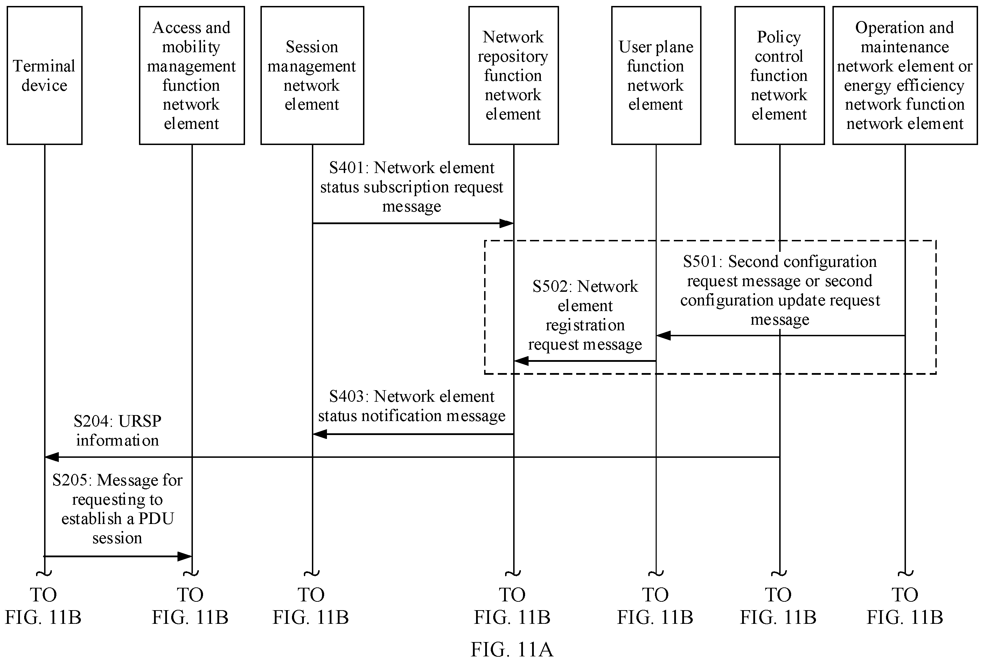

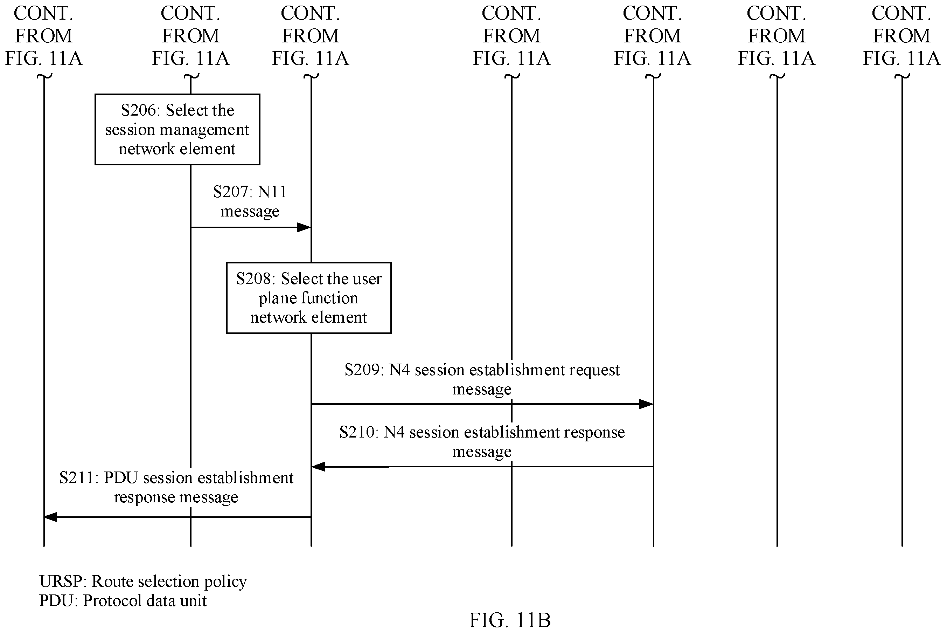

Example 4: A case in which a third network element is a network repository function network element. As shown in a dashed box in FIG. 11A, a difference between a network element selection method shown in FIG. 11A and FIG. 11B and the network element selection method shown in FIG. 10A and FIG. 10B lies in that the network element selection method shown in FIG. 11A and FIG. 11B does not include steps S402 in FIG. 10A, and the network element selection method shown in FIG. 11A and FIG. 11B further includes steps S501 and S502 before step S403.

S501: An operation and maintenance network element or an energy efficiency network function network element sends a second configuration request message or a second configuration update request message to each user plane function network element in one or more user plane function network elements, where the second configuration request message or the second configuration update request message sent to each user plane function network element includes an identifier of a network repository function network element and description information of the user plane function network element. Correspondingly, each user plane function network element in the one or more user plane function network elements receives the second configuration request message or the second configuration update request message from the operation and maintenance network element or the energy efficiency network function network element.

The second configuration request message is used to configure related information of the user plane function network element for the user plane function network element, and the second configuration update request message is used to update the related information of the user plane function network element for the user plane function network element. For example, the second configuration request message may be a UPF configuration request (namely, UPF configuration request) message, and the second configuration update request message may be a UPF configuration update request (namely, UPF configuration update request) message.

Optionally, the second configuration request message or the second configuration update request message may further include one or more of the following information of the user plane function network element: load information, location information, an identifier of a supported data network, and an identifier of a supported network slice.

In addition, for specific descriptions of the description information of the second network element, refer to the foregoing related descriptions. Details are not described again.

S502: Each user plane function network element in the one or more user plane function network elements sends a network element registration request message to the network repository function network element, where the network element registration request message sent by each user plane function network element includes the description information of the user plane function network element. Correspondingly, the network repository function network element receives the network element registration request message from each user plane function network element in the one or more user plane function network elements.

The network element registration request message is used by the user plane function network element to notify the network repository function network element of updated information of the user plane function network element. The network element registration request message may be, for example, a network function management and network function registration (namely, Nnrf_NFManagement_NFRegister) message.

Optionally, the network element registration request message and/or the network element status notification message in step S403 may further include one or more of the following information of the user plane function network element: load information, location information, an identifier of a supported data network, and an identifier of a supported network slice.

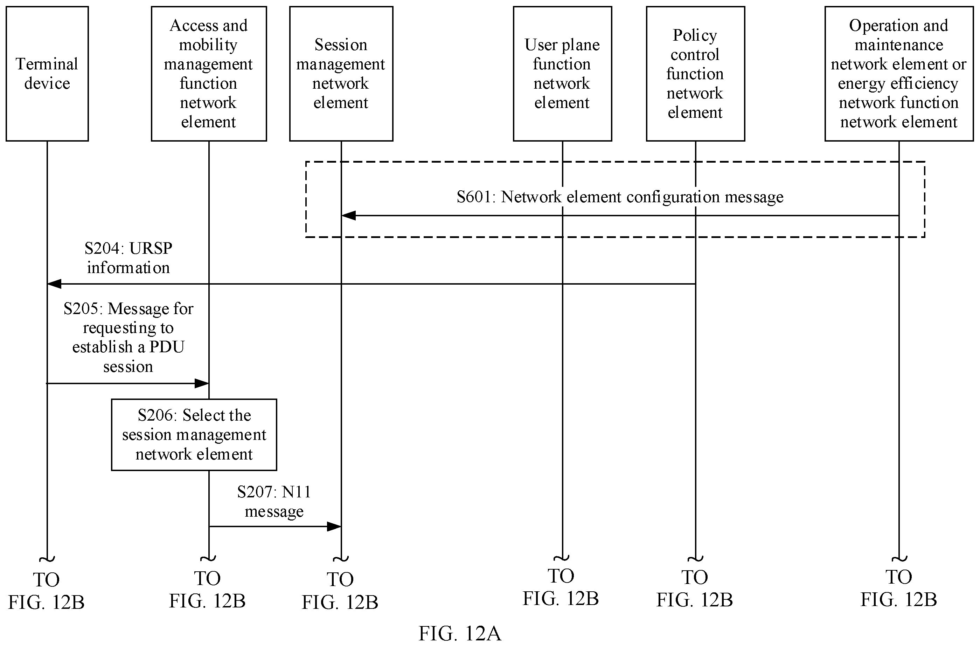

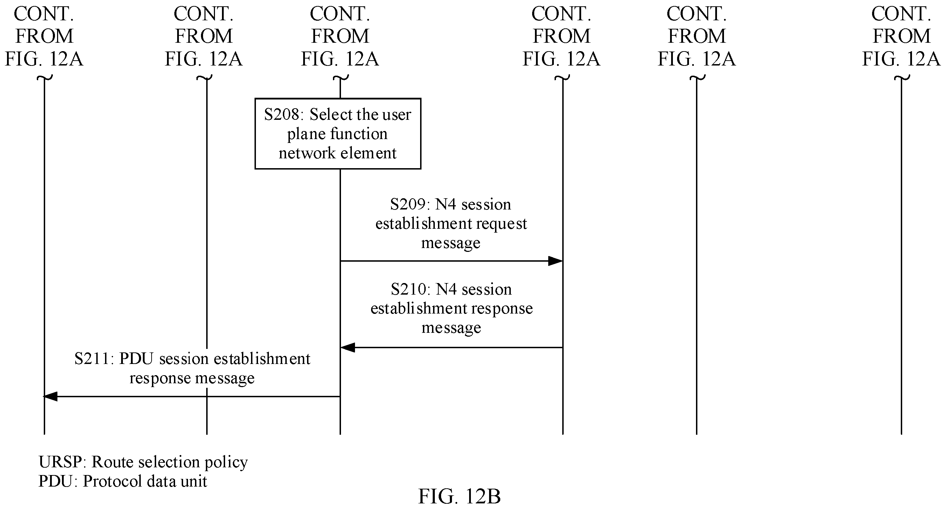

Example 5: A case in which a third network element is an operation and maintenance network element or an energy efficiency network function network element. As shown in a dashed box in FIG. 12A, a difference between a network element selection method shown in FIG. 12A and FIG. 12B and the network element selection method shown in FIG. 8A and FIG. 8B lies in that the network element selection method shown in FIG. 12A and FIG. 12B does not include steps S201 to S203 in FIG. 8A, and the network element selection method shown in FIG. 12A and FIG. 12B further includes step S601.

S601: An operation and maintenance network element or an energy efficiency network function network element sends a network element configuration message to a session management function network element, where the network element configuration message includes an identifier of each user plane function network element in one or more user plane function network elements and description information of each user plane function network element. Correspondingly, the session management function network element receives the network element configuration message sent by the operation and maintenance network element or the energy efficiency network function network element.

The network element configuration message is used to notify the session management function network element of configuration information or updated information of a network element in a network. The network element configuration message may be, for example, a network function configuration request (namely, NF Configuration request) message. Optionally, the network element configuration message may further include one or more of the following information of the user plane function network element: load information, location information, an identifier of a supported data network, and an identifier of a supported network slice. In addition, for specific descriptions of the description information of the second network element, refer to the foregoing related descriptions. Details are not described again.

To implement functions in the methods provided in the foregoing embodiments of this application, a first network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

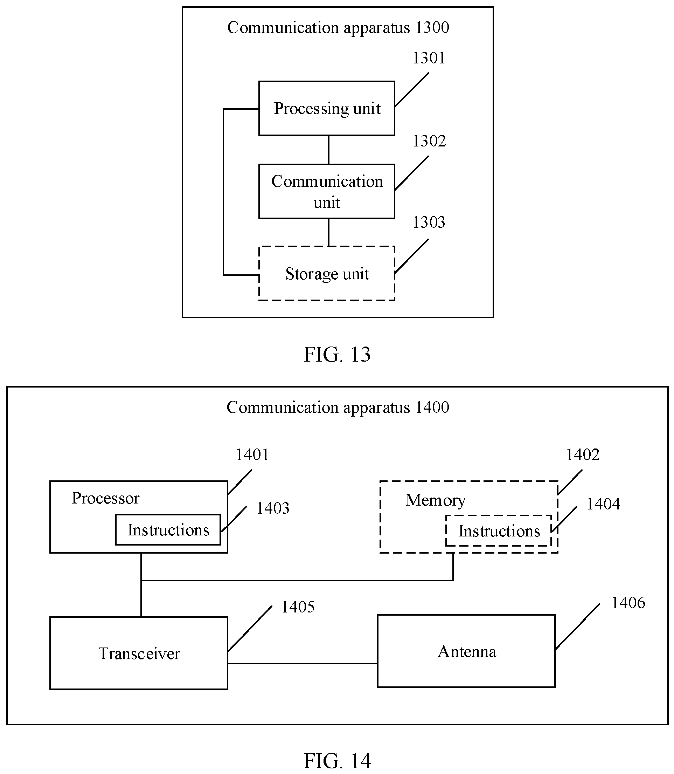

As shown in FIG. 13, an embodiment of this application provides a communication apparatus 1300. The communication apparatus 1300 may be a first network element, or may be a component (for example, an integrated circuit or a chip) of a network element. The communication apparatus 1300 may alternatively be another communication unit, configured to implement the methods in the method embodiments of this application. The communication apparatus 1300 may include a processing unit 1301. Optionally, the communication apparatus 1300 may further include a communication unit 1302. The processing unit 1301 is configured to control the communication unit 1302 to perform data/signaling receiving and sending. The communication unit 1302 may also be referred to as a transceiver unit. Optionally, the communication unit 1302 may include a sending unit and a receiving unit. The sending unit may be configured to send data/signaling, and the receiving unit may be configured to receive data/signaling. Optionally, the communication apparatus 1300 may further include a storage unit 1303. The storage unit 1303 may be configured to store information and/or data and/or instructions, and/or the like. The storage unit 1303 may interact with the processing unit 1301, or may interact with the communication unit 1302.

In a possible design, for a case in which the communication apparatus 1300 is configured to implement a function of the first network element in the foregoing method embodiments,
the communication unit 1302 is configured to receive description information of one or more second network elements in a network, where the description information of each second network element in the one or more second network elements indicates whether the second network element is disabled when the network is in an energy saving state; and
the processing unit 1301 is configured to select, based on the description information of the one or more second network elements, a second network element from the one or more second network elements for a session that a terminal device requests to establish.

In an optional implementation, when selecting, based on the description information of the one or more second network elements, a second network element from the one or more second network elements for a session that a terminal device requests to establish, the processing unit 1301 is specifically configured to: select the second network element for the session from the one or more second network elements based on a service continuity requirement corresponding to the session and the description information of the one or more second network elements.

In an optional implementation, when the service continuity requirement corresponding to the session indicates to keep transmission continuity of a service in the network within duration of the session, description information of the second network element selected for the session indicates that the second network element is not disabled when the network is in the energy saving state.

In an optional implementation, a service continuity requirement corresponding to the session is an SSC mode corresponding to the session.

In an optional implementation, the communication unit 1302 is further configured to receive first information from the terminal device, where the first information indicates an SSC mode requested by the terminal device for the session. The processing unit 1301 is further configured to determine, based on the SSC mode requested by the terminal device for the session, the SSC mode corresponding to the session.

In an optional implementation, when the SSC mode corresponding to the session is an SSC mode 1, the description information of the second network element selected for the session indicates that the second network element is not disabled when the network is in the energy saving state, and the SSC mode 1 indicates that changing the second network element corresponding to the session within the duration of the session is not supported.

In an optional implementation, when the SSC mode corresponding to the session is an SSC mode 2 or an SSC mode 3, the description information of the second network element selected for the session indicates that the second network element is disabled when the network is in the energy saving state, and the SSC mode 2 and the SSC mode 3 indicate that changing the second network element corresponding to the session within the duration of the session is supported.

In an optional implementation, that the description information of each second network element in the one or more second network elements indicates whether the second network element is disabled when the network is in an energy saving state includes: The description information of each second network element in the one or more second network elements indicates whether a data network and/or a network slice supported by the second network element are/is disabled when the network is in the energy saving state.

The communication unit 1302 is further configured to receive second information from the terminal device, where the second information indicates a data network and/or a network slice associated with the session and requested by the terminal device.

When the SSC mode corresponding to the session is an SSC mode 1, the second network element selected for the session supports the data network and/or the network slice associated with the session and requested by the terminal device, and the description information of the second network element selected for the session indicates that the data network and/or the network slice associated with the session and requested by the terminal device are/is not disabled when the network is in the energy saving state.

Alternatively, when the SSC mode corresponding to the session is an SSC mode 2 or an SSC mode 3, the second network element selected for the session supports the data network and/or the network slice associated with the session and requested by the terminal device, and the description information of the second network element selected for the session indicates that the data network and/or the network slice associated with the session and requested by the terminal device are/is disabled when the network is in the energy saving state.

The SSC mode 1 indicates that changing the second network element corresponding to the session within the duration of the session is not supported, and the SSC mode 2 and the SSC mode 3 indicate that changing the second network element corresponding to the session within the duration of the session is supported.

In an optional implementation, when the description information of the second network element indicates that the second network element is disabled when the network is in the energy saving state, the description information of the second network element further indicates a priority of disabling the second network element when the network is in the energy saving state.

When selecting the second network element for the session from the one or more second network elements based on the service continuity requirement corresponding to the session and the description information of the one or more second network elements, the processing unit 1301 is specifically configured to:
when the SSC mode corresponding to the session is an SSC mode 1, and the description information of each second network element in the one or more second network elements indicates that the second network element is disabled when the network is in the energy saving state, select a second network element for the session based on a priority, indicated by the description information of each second network element in the one or more second network elements, of disabling the second network element when the network is in the energy saving state; where the SSC mode 1 indicates that changing the second network element corresponding to the session within the duration of the session is not supported.

In an optional implementation, the description information of each second network element in the one or more second network elements further indicates a validity period of the description information. The communication unit 1302 is further configured to receive third information from the terminal device, where the third information indicates the duration of the session that the terminal device requests to establish; and the validity period of the description information of the second network element selected for the session includes a part or all of the duration.

In an optional implementation, when receiving the description information of the one or more second network elements in the network, the communication unit 1302 is specifically configured to receive the description information of the second network element sent by each second network element in the one or more second network elements.

In an optional implementation, when receiving the description information of the one or more second network elements in the network, the communication unit 1302 is specifically configured to receive the description information of the one or more second network elements sent by a third network element.

In an optional implementation, the communication unit 1302 is further configured to receive, from the terminal device, a message for requesting to establish a session.

In an optional implementation, the apparatus 1300 is a session management function network element, and the second network element is a user plane function network element.

This embodiment of this application and the foregoing method embodiment are based on the same concept, and bring a same technical effect. For a specific principle, refer to the descriptions of the foregoing embodiment. Details are not described again.

An embodiment of this application further provides a communication apparatus 1400, as shown in FIG. 14. The communication apparatus 1400 may be a first network element, or may be a chip, a chip system, a processor, or the like that supports the first network element in implementing the foregoing methods. The apparatus may be configured to implement the method described in the foregoing method embodiments. For details, refer to the descriptions of the foregoing method embodiments.

The communication apparatus 1400 includes one or more processors 1401. The processor 1401 may be configured to implement some or all of the functions of the first network element by using a logic circuit or by running a computer program. The processor 1401 may be a general-purpose processor, a dedicated processor, or the like. For example, the processor 1401 may be a baseband processor, a digital signal processor, an application-specific integrated circuit, a field programmable gate array or another programmable logic device, a discrete gate or a transistor logic device, or a discrete hardware component or a CPU. The baseband processor may be configured to process a communication protocol and communication data. The central processing unit may be configured to control the communication apparatus, execute a software program, and process data of the software program. The communication apparatus is, for example, a base station, a baseband chip, a terminal, a terminal chip, a distributed unit (distributed unit, DU), or a central unit (central unit, CU).

Optionally, the communication apparatus 1400 may include one or more memories 1402. The memory may store instructions 1404, and the instructions may be run on the processor 1401, to enable the communication apparatus 1400 to perform the method described in the foregoing method embodiments. Optionally, the memory 1402 may further store data. The processor 1401 and the memory 1402 may be separately disposed, or may be integrated.

The memory 1402 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the communication apparatus 1400 may further include a transceiver 1405 and an antenna 1406. The transceiver 1405 may be referred to as a transceiver unit, a transceiver machine, a transceiver circuit, or the like, and is configured to implement a transceiver function. The transceiver 1405 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, for a case in which the communication apparatus 1400 is configured to implement a function of the first network element in the foregoing method embodiments,
the transceiver 1405 is configured to receive description information of one or more second network elements in a network, where the description information of each second network element in the one or more second network elements indicates whether the second network element is disabled when the network is in an energy saving state; and
the processor 1401 is configured to select, based on the description information of the one or more second network elements, a second network element from the one or more second network elements for a session that a terminal device requests to establish.

In an optional implementation, when selecting, based on the description information of the one or more second network elements, a second network element from the one or more second network elements for a session that a terminal device requests to establish, the processor 1401 is specifically configured to: select the second network element for the session from the one or more second network elements based on a service continuity requirement corresponding to the session and the description information of the one or more second network elements.

In an optional implementation, when the service continuity requirement corresponding to the session indicates to keep transmission continuity of a service in the network within duration of the session, description information of the second network element selected for the session indicates that the second network element is not disabled when the network is in the energy saving state.

In an optional implementation, a service continuity requirement corresponding to the session is an SSC mode corresponding to the session.

In an optional implementation, the transceiver 1405 is further configured to receive first information from the terminal device, where the first information indicates an SSC mode requested by the terminal device for the session. The processor 1401 is further configured to determine, based on the SSC mode requested by the terminal device for the session, the SSC mode corresponding to the session.

In an optional implementation, when the SSC mode corresponding to the session is an SSC mode 1, the description information of the second network element selected for the session indicates that the second network element is not disabled when the network is in the energy saving state, and the SSC mode 1 indicates that changing the second network element corresponding to the session within the duration of the session is not supported.

In an optional implementation, when the SSC mode corresponding to the session is an SSC mode 2 or an SSC mode 3, the description information of the second network element selected for the session indicates that the second network element is disabled when the network is in the energy saving state, and the SSC mode 2 and the SSC mode 3 indicate that changing the second network element corresponding to the session within the duration of the session is supported.

In an optional implementation, that the description information of each second network element in the one or more second network elements indicates whether the second network element is disabled when the network is in an energy saving state includes: The description information of each second network element in the one or more second network elements indicates whether a data network and/or a network slice supported by the second network element are/is disabled when the network is in the energy saving state.

The transceiver 1405 is further configured to receive second information from the terminal device, where the second information indicates a data network and/or a network slice associated with the session and requested by the terminal device.

When the SSC mode corresponding to the session is an SSC mode 1, the second network element selected for the session supports the data network and/or the network slice associated with the session and requested by the terminal device, and the description information of the second network element selected for the session indicates that the data network and/or the network slice associated with the session and requested by the terminal device are/is not disabled when the network is in the energy saving state.

Alternatively, when the SSC mode corresponding to the session is an SSC mode 2 or an SSC mode 3, the second network element selected for the session supports the data network and/or the network slice associated with the session and requested by the terminal device, and the description information of the second network element selected for the session indicates that the data network and/or the network slice associated with the session and requested by the terminal device are/is disabled when the network is in the energy saving state.

The SSC mode 1 indicates that changing the second network element corresponding to the session within the duration of the session is not supported, and the SSC mode 2 and the SSC mode 3 indicate that changing the second network element corresponding to the session within the duration of the session is supported.

In an optional implementation, when the description information of the second network element indicates that the second network element is disabled when the network is in the energy saving state, the description information of the second network element further indicates a priority of disabling the second network element when the network is in the energy saving state.

When selecting the second network element for the session from the one or more second network elements based on the service continuity requirement corresponding to the session and the description information of the one or more second network elements, the processor 1401 is specifically configured to:
when the SSC mode corresponding to the session is an SSC mode 1, and the description information of each second network element in the one or more second network elements indicates that the second network element is disabled when the network is in the energy saving state, select a second network element for the session based on a priority, indicated by the description information of each second network element in the one or more second network elements, of disabling the second network element when the network is in the energy saving state; where the SSC mode 1 indicates that changing the second network element corresponding to the session within the duration of the session is not supported.

In an optional implementation, the description information of each second network element in the one or more second network elements further indicates a validity period of the description information. The transceiver 1405 is further configured to receive third information from the terminal device, where the third information indicates the duration of the session that the terminal device requests to establish; and the validity period of the description information of the second network element selected for the session includes a part or all of the duration.

In an optional implementation, when receiving the description information of the one or more second network elements in the network, the transceiver 1405 is specifically configured to receive the description information of the second network element sent by each second network element in the one or more second network elements.

In an optional implementation, when receiving the description information of the one or more second network elements in the network, the transceiver 1405 is specifically configured to receive the description information of the one or more second network elements sent by a third network element.

In an optional implementation, the transceiver 1405 is further configured to receive, from the terminal device, a message for requesting to establish a session.

In an optional implementation, the apparatus 1400 is a session management function network element, and the second network element is a user plane function network element.

In another possible design, the processor 1401 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1401 may store instructions 1403, and the instructions 1403 are run on the processor 1401, to enable the communication apparatus 1400 to perform the method described in the foregoing method embodiments. The instructions 1403 may be built into the processor 1401. In this case, the processor 1401 may be implemented by using hardware.

In still another possible design, the communication apparatus 1400 may include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an nMetal-oxide-semiconductor (nMetal-oxide-semiconductor, NMOS), a positive channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing method embodiment are based on the same concept, and bring a same technical effect. For a specific principle, refer to the descriptions of the foregoing method embodiments. Details are not described again.

This application further provides a computer-readable storage medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

This application further provides a computer program. When the computer program is run on a computer, the function in any one of the foregoing method embodiments is implemented.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network element selection method, wherein the method comprises:
receiving description information of one or more second network elements in a network, wherein the description information of each second network element in the one or more second network elements indicates whether the second network element is disabled when the network is in an energy saving state; and
selecting, based on the description information of the one or more second network elements, a second network element from the one or more second network elements for a session that a terminal device requests to establish.

2. The method according to claim 1, wherein selecting, based on the description information of the one or more second network elements, the second network element from the one or more second network elements for the session that the terminal device requests to establish comprises:
selecting the second network element for the session from the one or more second network elements based on a service continuity requirement corresponding to the session and the description information of the one or more second network elements.

3. The method according to claim 2, wherein when the service continuity requirement corresponding to the session indicates to keep transmission continuity of a service in the network within duration of the session, description information of the second network element selected for the session indicates that the second network element is not disabled when the network is in the energy saving state.

4. The method according to claim 2 or 3, wherein
the service continuity requirement corresponding to the session is a session and service continuity SSC mode corresponding to the session.

5. The method according to claim 4, wherein the method further comprises:
receiving first information from the terminal device, wherein the first information indicates an SSC mode requested by the terminal device for the session; and
determining, based on the SSC mode requested by the terminal device for the session, the SSC mode corresponding to the session.

6. The method according to claim 4 or 5, wherein
when the SSC mode corresponding to the session is an SSC mode 1, the description information of the second network element selected for the session indicates that the second network element is not disabled when the network is in the energy saving state, and the SSC mode 1 indicates that changing the second network element corresponding to the session within the duration of the session is not supported.

7. The method according to claim 4 or 5, wherein
when the SSC mode corresponding to the session is an SSC mode 2 or an SSC mode 3, the description information of the second network element selected for the session indicates that the second network element is disabled when the network is in the energy saving state, and the SSC mode 2 and the SSC mode 3 indicate that changing the second network element corresponding to the session within the duration of the session is supported.

8. The method according to claim 4 or 5, wherein that the description information of each second network element in the one or more second network elements indicates whether the second network element is disabled when the network is in an energy saving state comprises:
the description information of each second network element in the one or more second network elements indicates whether a data network and/or a network slice supported by the second network element are/is disabled when the network is in the energy saving state; and
the method further comprises:
receiving second information from the terminal device, wherein the second information indicates a data network and/or a network slice associated with the session and requested by the terminal device; wherein
when the SSC mode corresponding to the session is an SSC mode 1, the second network element selected for the session supports the data network and/or the network slice associated with the session and requested by the terminal device, and the description information of the second network element selected for the session indicates that the data network and/or the network slice associated with the session and requested by the terminal device are/is not disabled when the network is in the energy saving state; or
when the SSC mode corresponding to the session is an SSC mode 2 or an SSC mode 3, the second network element selected for the session supports the data network and/or the network slice associated with the session and requested by the terminal device, and the description information of the second network element selected for the session indicates that the data network and/or the network slice associated with the session and requested by the terminal device are/is disabled when the network is in the energy saving state;
wherein the SSC mode 1 indicates that changing the second network element corresponding to the session within the duration of the session is not supported; and
the SSC mode 2 and the SSC mode 3 indicate that changing the second network element corresponding to the session within the duration of the session is supported.

9. The method according to claim 4 or 5, wherein
when the description information of the second network element indicates that the second network element is disabled when the network is in the energy saving state, the description information of the second network element further indicates a priority of disabling the second network element when the network is in the energy saving state; and
selecting the second network element for the session from the one or more second network elements based on the service continuity requirement corresponding to the session and the description information of the one or more second network elements comprises:
when the SSC mode corresponding to the session is an SSC mode 1, and the description information of each second network element in the one or more second network elements indicates that the second network element is disabled when the network is in the energy saving state, selecting a second network element for the session based on a priority, indicated by the description information of each second network element in the one or more second network elements, of disabling the second network element when the network is in the energy saving state;
wherein the SSC mode 1 indicates that changing the second network element corresponding to the session within the duration of the session is not supported.

10. The method according to any one of claims 1 to 9, wherein the description information of each second network element in the one or more second network elements further indicates a validity period of the description information; and
before selecting, based on the description information of the one or more second network elements, the second network element from the one or more second network elements for the session that the terminal device requests to establish, the method further comprises:
receiving third information from the terminal device, wherein the third information indicates the duration of the session that the terminal device requests to establish; and
the validity period of the description information of the second network element selected for the session comprises a part or all of the duration.

11. The method according to any one of claims 1 to 10, wherein receiving the description information of the one or more second network elements in the network comprises:
receiving the description information of the second network element sent by each second network element in the one or more second network elements.

12. The method according to any one of claims 1 to 10, wherein receiving the description information of the one or more second network elements in the network comprises:
receiving the description information of the one or more second network elements sent by a third network element.

13. The method according to any one of claims 1 to 12, wherein the method further comprises:
receiving, from the terminal device, a message for requesting to establish the session.

14. The method according to any one of claims 1 to 13, wherein
the method is performed by a session management function network element, and the second network element is a user plane function network element.

15. A communication apparatus, wherein the apparatus comprises:
a communication unit, configured to receive description information of one or more second network elements in a network, wherein the description information of each second network element in the one or more second network elements indicates whether the second network element is disabled when the network is in an energy saving state; and
a processing unit, configured to select, based on the description information of the one or more second network elements, a second network element from the one or more second network elements for a session that a terminal device requests to establish.

16. The apparatus according to claim 15, wherein when selecting, based on the description information of the one or more second network elements, the second network element from the one or more second network elements for the session that the terminal device requests to establish, the processing unit is specifically configured to:
select the second network element for the session from the one or more second network elements based on a service continuity requirement corresponding to the session and the description information of the one or more second network elements.

17. The apparatus according to claim 16, wherein when the service continuity requirement corresponding to the session indicates to keep transmission continuity of a service in the network within duration of the session, description information of the second network element selected for the session indicates that the second network element is not disabled when the network is in the energy saving state.

18. The apparatus according to claim 16 or 17, wherein
the service continuity requirement corresponding to the session is a session and service continuity SSC mode corresponding to the session.

19. The apparatus according to claim 18, wherein
the communication unit is further configured to receive first information from the terminal device, wherein the first information indicates an SSC mode requested by the terminal device for the session; and
the processing unit is further configured to determine, based on the SSC mode requested by the terminal device for the session, the SSC mode corresponding to the session.

20. The apparatus according to claim 18 or 19, wherein
when the SSC mode corresponding to the session is an SSC mode 1, the description information of the second network element selected for the session indicates that the second network element is not disabled when the network is in the energy saving state, and the SSC mode 1 indicates that changing the second network element corresponding to the session within the duration of the session is not supported.

21. The apparatus according to claim 18 or 19, wherein
when the SSC mode corresponding to the session is an SSC mode 2 or an SSC mode 3, the description information of the second network element selected for the session indicates that the second network element is disabled when the network is in the energy saving state, and the SSC mode 2 and the SSC mode 3 indicate that changing the second network element corresponding to the session within the duration of the session is supported.

22. The apparatus according to claim 18 or 19, wherein that the description information of each second network element in the one or more second network elements indicates whether the second network element is disabled when the network is in an energy saving state comprises:
the description information of each second network element in the one or more second network elements indicates whether a data network and/or a network slice supported by the second network element are/is disabled when the network is in the energy saving state; and
the communication unit is further configured to receive second information from the terminal device, wherein the second information indicates a data network and/or a network slice associated with the session and requested by the terminal device; wherein
when the SSC mode corresponding to the session is an SSC mode 1, the second network element selected for the session supports the data network and/or the network slice associated with the session and requested by the terminal device, and the description information of the second network element selected for the session indicates that the data network and/or the network slice associated with the session and requested by the terminal device are/is not disabled when the network is in the energy saving state; or
when the SSC mode corresponding to the session is an SSC mode 2 or an SSC mode 3, the second network element selected for the session supports the data network and/or the network slice associated with the session and requested by the terminal device, and the description information of the second network element selected for the session indicates that the data network and/or the network slice associated with the session and requested by the terminal device are/is disabled when the network is in the energy saving state;
wherein the SSC mode 1 indicates that changing the second network element corresponding to the session within the duration of the session is not supported; and
the SSC mode 2 and the SSC mode 3 indicate that changing the second network element corresponding to the session within the duration of the session is supported.

23. The apparatus according to claim 18 or 19, wherein
when the description information of the second network element indicates that the second network element is disabled when the network is in the energy saving state, the description information of the second network element further indicates a priority of disabling the second network element when the network is in the energy saving state; and
when selecting the second network element for the session from the one or more second network elements based on the service continuity requirement corresponding to the session and the description information of the one or more second network elements, the processing unit is specifically configured to:
when the SSC mode corresponding to the session is an SSC mode 1, and the description information of each second network element in the one or more second network elements indicates that the second network element is disabled when the network is in the energy saving state, select a second network element for the session based on a priority, indicated by the description information of each second network element in the one or more second network elements, of disabling the second network element when the network is in the energy saving state;
wherein the SSC mode 1 indicates that changing the second network element corresponding to the session within the duration of the session is not supported.

24. The apparatus according to any one of claims 15 to 23, wherein the description information of each second network element in the one or more second network elements further indicates a validity period of the description information;
the communication unit is further configured to receive third information from the terminal device, wherein the third information indicates the duration of the session that the terminal device requests to establish; and
the validity period of the description information of the second network element selected for the session comprises a part or all of the duration.

25. The apparatus according to any one of claims 15 to 24, wherein when receiving the description information of the one or more second network elements in the network, the communication unit is specifically configured to:
receive the description information of the second network element sent by each second network element in the one or more second network elements.

26. The apparatus according to any one of claims 15 to 24, wherein when receiving the description information of the one or more second network elements in the network, the communication unit is specifically configured to:
receive the description information of the one or more second network elements sent by a third network element.

27. The apparatus according to any one of claims 15 to 26, wherein
the communication unit is further configured to receive, from the terminal device, a message for requesting to establish the session.

28. A communication apparatus, comprising a memory and a processor, wherein
the memory is configured to store instructions or a computer program; and
the processor is configured to execute the computer program or the instructions stored in the memory, to enable the communication apparatus to perform the method according to any one of claims 1 to 14.

29. A computer-readable storage medium, wherein the computer-readable storage medium stores a computer program; and when the computer program is run, the method according to any one of claims 1 to 14 is implemented.

30. A computer program product, wherein the computer program product comprises computer program code, and when the computer program code is run, the method according to any one of claims 1 to 14 is implemented.
